(19) Europäisches Patentamt
European Patent Office
Office européen des brevets

(11) **EP 2 196 254 B1**

(12) **EUROPÄISCHE PATENTSCHRIFT**

(45) Veröffentlichungstag und Bekanntmachung des Hinweises auf die Patenterteilung:
**12.10.2011 Patentblatt 2011/41**

(51) Int Cl.:
***B01D 71/34*** *(2006.01)*     ***B01D 69/08*** *(2006.01)*

(21) Anmeldenummer: **08171473.5**

(22) Anmeldetag: **12.12.2008**

(54) **Hydrophobe ozonstabile PVDF-Membran mit hoher mechanischer Stabilität**

Hydrophobic ozone-stable PVDF membrane with high mechanical stability

Membrane PVDF hydrophobe résistant à l'ozone et ayant une stabilité mécanique élevée

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(43) Veröffentlichungstag der Anmeldung:
**16.06.2010 Patentblatt 2010/24**

(73) Patentinhaber: **Membrana GmbH**
**42289 Wuppertal (DE)**

(72) Erfinder:
• **Huang, Quan**
**58332, Schwelm (DE)**
• **Bauer, Karl**
**63874, Dammbach (DE)**
• **Duong, Phung**
**45257, Essen (DE)**
• **Schuster, Oliver, Dr.**
**58285, Gevelsberg (DE)**

(74) Vertreter: **Schröder, Richard**
**CPW GmbH**
**Kasinostrasse 19-21**
**42103 Wuppertal (DE)**

(56) Entgegenhaltungen:
**WO-A-02/058828     US-A1- 2004 050 791**

## Beschreibung

Die Erfindung betrifft eine hydrophobe Hohlfasermembran aus einem Vinylidenfluorid Homopolymer oder Copolymer, welche eine Wand mit einer äußeren Oberfläche an ihrer Außenseite und einer inneren Oberfläche an ihrer Innenseite und mit einer Wanddicke sowie ein von der Innenseite umschlossenes Lumen aufweist, wobei die Wand der Hohlfasermembran eine mikroporöse Stützschicht mit schwammartiger, offenporiger und über der Wanddicke isotroper Porenstruktur ohne Fingerporen besitzt, die sich über mindestens 90 % der Wanddicke erstreckt und deren Poren einen mittleren Durchmesser von weniger als 0,5 µm aufweisen. Die Erfindung betrifft des weiteren ein Verfahren zur Herstellung derartiger Membranen.

Für verschiedenste industrielle Prozesse z.B. im Bereich der Pharmaindustrie oder der Halbleiterindustrie wird Wasser mit einem hohen Grand an Reinheit benötigt. Die Anforderungen an die Qualität des Wassers beziehen sich hierbei nicht nur auf Reinheit hinsichtlich z.B. partikulärer Bestandteile oder gelöster Stoffe, sondern auch hinsichtlich im Wasser gelöster Gase, die in einer Reihe von Anwendungen zu negativen Auswirkungen führen können. Beispiele für solche gelösten Gase sind Sauerstoff, Kohlendioxid oder Ammoniak. So hat Sauerstoff eine oxidative Wirkung, die beispielsweise bei Kesselspeisewasser oder geschlossenen Kühlwasserkreisläufen zu Korrosionsproblemen bei Kontakt mit Kohlenstoffstählen führen kann. Darüber hinaus kann die Anwesenheit von Sauerstoff das Keimwachstum beschleunigen. Bei der Herstellung von Reinstwasser kann die Anwesenheit von Kohlendioxid zur Bildung von Kohlensäure und bei Dissoziation der Kohlensäure zu einer Erhöhung der Leitfähigkeit des Wassers und zu einer Belastung z.B. von Ionenaustauscheranlagen führen.

Zur Entfernung dieser Gase werden in zunehmendem Maße Membrankontaktoren eingesetzt, die üblicherweise Bündel von Hohlfasermembranen enthalten. In der Regel werden dabei Hohlfasermembranen aus hydrophoben Polyolefinen wie z.B. Polypropylen, Poly(4-methyl-1-penten) oder HDPE eingesetzt. Derartige Membranen werden beispielsweise in der US-A-3 558 764, der US-A-4 664 681 oder der US-A-6 497 752 beschrieben. Bei der Entgasung über Membrankontaktoren durchströmt das zu entgasende Wasser in der Regel das Membranbündel außenseitig, d.h. es überströmt die im Membrankontaktor enthaltenen Hohlfasermembranen an ihrer Außenseite. Zur Entfernung des Gases durchströmt lumenseitig ein Strippgas die Hohlfasermembranen oder es wird lumenseitig ein Vakuum angelegt. Insbesondere in letzterem Fall unterliegen die Hohlfasermembranen nennenswerten Druckbelastungen.

Neben Anwendungen zur Entgasung von Flüssigkeiten wie z.B. Wasser gibt es auch zahlreiche Anwendungen, bei denen Flüssigkeiten mit bestimmten Gasen beaufschlagt, d.h. begast werden. Die Prinzipien bei diesen Begasungsprozessen ähneln in umgekehrter Weise denjenigen der Entgasung.

Im Hinblick auf viele Anwendungen im Bereich der Entgasung oder der Begasung sind die Materialeigenschaften der bislang eingesetzten Hohlfasermembranen auf Basis von Polyolefinen unzureichend. Insbesondere ist ein Schwachpunkt dieser Membranen des Stands der Technik deren mangelnde Beständigkeit gegen Oxidationsmittel wie z.B. Ozon oder Chlor. Auch reicht oftmals ihre Säurebeständigkeit in der Anwendung nicht aus.

Es ist bekannt, dass Membranen aus Polyvinylidenfluorid eine gute chemische und thermische Beständigkeit sowie gute mechanische Eigenschaften besitzen. Membranen aus Polyvinylidenfluorid werden beispielsweise in der EP-A-0 378 441 offenbart. Die Membranen der EP-A-0 378 441 haben eine gleichmäßige und dreidimensionale netzwerkartige Porenstruktur, sind in ihrem Wandinneren frei von Macrovoids, d.h. frei von Poren mit einem Durchmesser von 10 µm oder mehr, und haben an ihren beiden Oberflächen Poren mit einem mittleren Durchmesser im Bereich von 0,05 µm bis kleiner 5 µm. Die Membranen der EP-A-0 378 441 sind für Anwendungen vornehmlich im Bereich der Mikrofiltration ausgelegt.

In der US-A-5 514 461 werden Flachmembranen aus Polyvinylidenfluorid mit einer asymmetrischen Struktur und durchgehenden Poren beschrieben. Die Poren auf den gegenüberliegenden Seiten der Membran weisen unterschiedliche mittlere Durchmesser auf, die sich um mindestens den Faktor 4 unterscheiden. Der mittels Blaspunktmethode ermittelte maximale Porendurchmesser liegt im Bereich zwischen etwa 0,01 und 10 µm, d.h. es wird mit diesen Membranen der Ultrafiltrations- und der Mikrofiltrationsbereich abgedeckt.

Die US-A-5 736 051 betrifft Membranen aus Polyvinylidenfluorid ohne Haut und mit einer isotropen, d.h. einer im wesentlichen gleichförmigen und symmetrischen Porenstruktur über der gesamten Membranwand. Die Membranen der US-A-5 736 051 sind typischerweise für Anwendungen im Ultrafiltrationsbereich und insbesondere z.B. zur Entfernung von Viren aus Flüssigkeiten vorgesehen. Sie sind mit einer Oberflächenbeschichtung versehen, um die Membran hydrophil und damit unanfälliger gegen eine Adsorption von Proteinen zu machen.

In der EP-A-0 734 759 werden Hohlfasermembranen aus Polyvinylidenfluorid mit netzwerk- oder faserartiger Struktur offenbart, bei denen eine Vielzahl von Polymerfäden an mehreren Punkten entlang eines jeden Fadens miteinander verbunden sind. Die Länge der Polymerfäden ist dabei wesentlich größer als ihre Dicke. Bevorzugt sind die Polymerfäden bei den Hohlfasermembranen der EP-A-0 734 759 in Längserstreckung der Hohlfasermembranen orientiert. Ausweislich der in der EP-A-0 734 759 gezeigten rastelektronischen Aufnahmen weisen die Hohlfasermembranen an ihren Oberflächen Öffnungen auf. Hinsichtlich der Membranstruktur grenzt sich die EP-A-0 734 759 gegenüber bekannten Membranen ab, die eine schwammartige Struktur mit zellförmigen, miteinander über Durchlässe verbundenen Poren aufweisen. Bei dem in der EP-A-0 734 759 offenbarten Verfahren zur Herstellung der Hohlfasermembranen handelt es sich um ein Verfahren mit thermisch induzierter Phasenseparation. Die Besonderheit des Verfahrens der EP-A-0 734 759 liegt dabei darin, dass der die Hohlfadendüse verlassende ausgeformte Hohlfaden zunächst an seiner Außenseite mit einer Beschichtungsflüssigkeit ummantelt wird, die i.w. die gleiche Temperatur aufweist wie der extrudierte Hohlfaden. Nach Durchlaufen einer Verweilstrecke wird der Hohlfaden in einem Abkühlbereich mittels einer Abkühlflüssigkeit zur Ausbildung der Membranstruktur abgekühlt.

Die EP-A-0 133 882 offenbart ebenfalls ein Verfahren zur Herstellung u.a. von Hohlfasermembranen aus Polyvinylidenfluorid über einen Prozess mit thermisch induzierter Phasenseparation. Bei diesem Verfahren wird die aus der Hohlfadendüse austretende Polymerlösung zur Abkühlung durch ein mit einem Abkühlmedium gefülltes U-förmig gebogenes Rohr geleitet, wobei als Abkühlmedium vorzugsweise Wasser eingesetzt wird. Im ersten Ast des U-Rohrs erfolgt unter Bedingungen, bei denen die mechanische Beanspruchung des das U-Rohr durchlaufenden Hohlfadens möglichst gering gehalten wird, eine Abkühlung und daraus resultierend eine Phasentrennung sowie anschließend eine zumindest teilweise Erstarrung der polymerreichen Phase erfolgt. Nach zumindest teilweiser Erstarrung der polymerreichen Phase wird der Hohlfaden am Ende des ersten Astes umgelenkt und von unten nach oben durch den zweiten Ast des U-Rohrs geführt. Die Hohlfasermembranen der EP-A-0 133 882 können eine isotrope Porenstruktur besitzen oder auch eine anisotrope Porenstruktur mit einem Gradienten in der Richtung von der Oberfläche in das Innere der Hohlfasermembran besitzen und weisen an jeder ihrer Oberflächen Poren auf. Für die gemäß den Beispielen der EP-A-0 133 882 hergestellten Polyvinylidenfluorid-Membranen wurden nach der Blaspunktmethode maximale Porengrößen von 0,58 $\mu$m bzw. 0,94 $\mu$m ermittelt. Als Anwendungen werden für die Membranen der EP-A-0 133 882 die Mikrofiltration von wässrigen Lösungen oder Lösungen in organischen Lösungsmitteln und die Transmembrandestillation zum Eindampfen von wässrigen Lösungen genannt.

In der WO-A-02/058828 werden asymmetrische Hohlfasermembranen beschrieben, die aus Polyvinylidenfluorid aufgebaut sein können. Die in dieser Schrift offenbarten Membranen besitzen vorzugsweise von der inneren Oberfläche zur äußeren Oberfläche hin eine über die Membranwand zunehmende asymmetrische Struktur. Die innere Oberfläche weist eine grobporige Struktur und die äußere Oberfläche ebenfalls eine poröse Struktur, wobei die Poren in der inneren Oberfläche größer sind als die Poren in der äußeren Oberfläche.

Die US-A-2004/0135274 betrifft Membranen aus Vinylidenfluorid Homopolymeren oder Copolymeren, die ebenfalls über ein Verfahren mit thermisch induzierter Phasenseparation hergestellt werden. Die Membranen der US-A-2004/0135274 haben eine isotrope Netzwerkstruktur mit dreidimensionalen Verästelungen in beliebige Raumrichtungen und es werden Membranen angestrebt, die poröse Oberflächen aufweisen. Entsprechend den Ausführungen in der US-A-2004/0135274 unterscheidet sich diese Struktur sowohl von Strukturen, von Membranen, die nach sogenannten Nass-Spinnverfahren hergestellt wurden, d.h. nach Verfahren, bei denen die Phasentrennung allein durch Eintauchen der Polymerlösung in einen Nichtlöser ausgelöst wird, als auch von partikulären Netzwerkstrukturen oder zellulären Strukturen. In einer Ausführungsform handelt es sich bei den Membranen der US-A-2004/0135274 um Hohlfasermembranen, bei deren Herstellung Abkühlung durch direkten Kontakt mit einem flüssigen Abkühlmedium von Vorteil ist. In diesem Fall wird vorzugsweise das zur Herstellung der Polymerlösung eingesetzte Lösemittel auch als Abkühlmedium verwendet. In Fällen dass das Abkühlmedium eine geringe Affinität zum Vinylidenfluorid Homopolymeren oder Copolymeren hat, weist die Oberfläche der resultierenden Membran eine hautähnliche Struktur oder eine aus einem partikelförmigen Material zusammengesetzte Struktur auf. Dies ist nach den Ausführungen der US-A-2004/0135274 bei sehr guten Lösemitteln für das Vinylidenfluorid Homopolymer oder Copolymer oder bei Wasser, Ethylenglykol oder Dekalin der Fall. In diesen Fällen lassen sich die gewünschten offenporigen Oberflächen durch Verstrecken erreichen. In den zugehörigen Figuren weisen die Oberflächen eine partikuläre bzw. sphärolithische Struktur auf.

Wenngleich die im Stand der Technik beschriebenen Membranen aus Polyvinylidenfluorid eine hohe chemische und thermische Beständigkeit aufweisen, d.h. Eigenschaften, die auch für Anwendungen im Bereich der Entgasung oder der Begasung wünschenswert sind, sind sie auf Grund ihrer Porenstruktur nicht für Anwendungen im Bereich der Entgasung oder der Begasung einsetzbar.

Es besteht daher ein Bedarf nach Hohlfasermembranen für die Entgasung bzw. Begasung, die eine hohe Oxidationsbeständigkeit und/oder eine hohe chemische Beständigkeit aufweisen und die gleichzeitig eine hohe mechanische Belastbarkeit sowie eine gute thermische Stabilität aufweisen.

Es ist daher Aufgabe der vorliegenden Erfindung, eine für die Entgasung bzw. Begasung geeignete Hohlfasermembran mit gegenüber den Hohlfasermembranen des Stands der Technik verbesserten Eigenschaften bereit zu stellen. Darüber hinaus ist Aufgabe der vorliegenden Erfindung, ein Verfahren zur Herstellung solcher verbesserter Membranen zur Verfügung zu stellen.

Die Aufgabe wird zum einen durch eine hydrophobe integral asymmetrische Hohlfasermembran aus einem Vinylidenfluorid Homopolymer oder Copolymer gelöst, welche eine Wand mit einer äußeren Oberfläche an ihrer Außenseite, einer inneren Oberfläche an ihrer Innenseite und einer Wanddicke sowie ein von der Innenseite umschlossenes Lumen aufweist, wobei die Wand der Hohlfasermembran eine mikroporöse Stützschicht mit einer schwammartigen, offenporigen und über der Wanddicke im wesentlichen isotropen Porenstruktur ohne Fingerporen besitzt und wobei sich die Stützschicht über mindestens 90 % der Wanddicke erstreckt und Poren mit einem mittleren Durchmesser von weniger als 0,5 $\mu$m aufweist, wobei die Hohlfasermembran dadurch gekennzeichnet ist, dass sie in der Wand angrenzend an die Stützschicht an ihrer äußeren Oberfläche eine Trennschicht mit einer Dicke im Bereich von 0,01 bis 5 $\mu$m und einer im Vergleich zur Stützschicht dichteren Struktur besitzt und die äußere Oberfläche bei rasterelektronenmikroskopischer Untersuchung mit 5000-facher Vergrößerung eine homogene, gleichförmige Struktur ohne Poren aufweist und dass sie eine Porosität im Bereich von 40 bis 80 Vol.-%, eine Wanddicke im Bereich von 25 bis 100 $\mu$m, einen Durchmesser des Lumens von 100 bis 500 $\mu$m sowie eine Permeabilität für Stickstoff von mindestens 25 ml/(cm$^2 \cdot$min$\cdot$bar) und eine Bruchdehnung von mindestens 250% aufweist.

Im Sinne der vorliegenden Erfindung wird unter einer integral asymmetrischen Membran eine Membran verstanden, bei der Trennschicht und Stützschicht aus dem gleichen Material bestehen sowie zusammen unmittelbar bei der Membranherstellung ausgebildet wurden, wodurch beide Schichten als integrale Einheit miteinander verbunden sind. Beim Übergang von der Trennschicht zur Stützschicht erfolgt allein eine Änderung in Bezug auf die Membranstruktur. Einen Gegensatz dazu bilden beispielsweise Composit-Membranen, die einen mehrschichtigen Aufbau aufweisen, indem auf einer porösen, oftmals mikroporösen Stützschicht oder Stützmembran in einem separaten Verfahrensschritt eine dichte Schicht als Trennschicht aufgebracht ist. Dies hat zur Folge, dass die Materialien, die die Stützschicht und die Trennschicht aufbauen, bei Composit-Membranen auch unterschiedliche Eigenschaften aufweisen.

Die spezielle Struktur der erfindungsgemäßen Hohlfasermembranen, insbesondere ihre mikroporöse Stützschicht mit schwammartiger, offenporiger und über der Wanddicke isotroper Porenstruktur ohne Fingerporen, die sich über mindestens 90 % der Wanddicke erstreckt und deren Poren einen mittleren Durchmesser von weniger als 0,5 $\mu$m aufweisen, sowie die homogene, gleichförmige und glatte Struktur der äußeren Oberfläche sind ursächlich für eine hohe Belastbarkeit und gute mechanische Eigenschaften der Membranen in der Anwendung. Mit dieser Struktur unterscheiden sich die erfindungsgemäßen Membranen von Membranen mit einer asymmetrischen Struktur, bei der sich die Porengröße auch innerhalb der Stützschicht verändert, und auch von Membranen, deren Oberflächen und/oder deren Stützstruktur eine partikuläre bzw. sphärolithische Struktur aufweisen. Diese Membranen des Stands der Technik weisen auf Grund ihrer andersartigen Struktur oftmals nur unzureichende mechanische Eigenschaften auf.

Die homogene, isotrope Struktur der Stützschicht der erfindungsgemäßen Hohlfasermembranen bewirkt bei einer mechanischen Beanspruchung eine gleichmäßige Verteilung der Belastungen über der Membranwand, was zu hohen Druckstabilitäten, hohen Bruchfestigkeiten und hohen Bruchdehnungen führt. Im Hinblick auf die mechanischen Eigenschaften ist gleichzeitig wichtig, dass die Größe der Poren in der Stützschicht in dem angegebenen Bereich bleibt. Insbesondere soll die Stützstruktur keine Fingerporen aufweisen, die vielfach auch als Kavernen oder Macrovoids bezeichnet werden und eine Größe bis zu mehreren $\mu$m haben können, sondern Poren, deren mittlerer Durchmesser kleiner als 0,5 $\mu$m ist, so dass die Stützschicht also relativ feinporig ist. Vorzugsweise ist der mittlere Durchmesser der Poren in der Stützschicht kleiner als 0,1 $\mu$m.

Die Porenstruktur in der Stützschicht ist erfindungsgemäß im wesentlichen isotrop. Hierunter ist zum einen zu verstehen, dass der mittlere Durchmesser der Poren in der Stützschicht über die Wanddicke gesehen bei rasterelektronenmikroskopischer Untersuchung mit 5000-facher Vergrößerung im wesentlichen konstant ist. Anders ausgedrückt kann der Bereich der isotropen Stützstruktur als ein Bereich angesehen werden, in dem Strömungskanäle mit über der Wanddicke im wesentlichen konstanten Durchmessern vorliegen. Natürlich ist zu berücksichtigen, dass die aktuelle Größe der Poren in der isotropen Stützschicht etwas variiert, d.h. in gewissem Ausmaß eine Porengrößenverteilung aufweist, wie dies für jede Membranstruktur gilt, auch wenn die Struktur in der rasterelektronenmikroskopischer Untersuchung isotrop erscheint. In Rahmen der vorliegenden Erfindung wird daher als ein im wesentlichen konstanter mittlerer Porendurchmesser ein solcher verstanden, der sich in der Erstreckung der Stützschicht über der Membranwand um nicht mehr als +/- 50 % ändert.

Zum anderen ist unter einer im wesentlichen isotropen Porenstruktur zu verstehen, dass, wenngleich die einzelnen Poren auch eine unregelmäßige oder längliche Form besitzen können, über alle Poren gemittelt die Poren in alle Raumrichtungen im wesentlichen gleiche Ausdehnung aufweisen, wobei Abweichungen zwischen den Ausdehnungen in den einzelnen Raumrichtungen von bis zu 20% eingeschlossen sind. Dabei weisen die erfindungemäßen Membranen eine zellartige Struktur auf, die von Porenwandungen umgebene Poren mit z.T. sphärischer und ellipsoider Form erkennen lassen, welche über Öffnungen in ihrer Wand miteinander in Verbindung stehen. Die vorliegende Struktur unterscheidet sich damit beispielsweise von Netzwerkstrukturen mit in den Raumrichtungen beliebig orientierten dreidimensionalen Verästelungen, wie sie z.B. die mikroporösen Membranen der US-A-2004/0135274 oder der EP-A-0 734 759 aufweisen, auf deren diesbezügliche Offenbarung an dieser Stelle ausdrücklich Bezug genommen wird. Auf der anderen Seite unterscheidet sich die Porenstruktur der Membranen der vorliegenden Erfindung von partikulären oder sphärolithischen Strukturen, bei denen die Polymerstruktur der Membran durch kugelförmige oder sphärolithische Partikel ausgebildet ist, die über fibrillenartige Stege miteinander verbunden sein können. Membranen mit derartigen Strukturen werden z.B. in der EP-A-1 230 970 oder der WO-A-93/22034 beschrieben oder in der US-A-2004/0135274 in Fig. 6 offenbart, auf deren diesbezügliche Offenbarung an dieser Stelle ausdrücklich Bezug genommen wird.

Erfindungsgemäß liegt die Porosität der hydrophoben Hohlfasermembranen im Bereich von 40 bis 80 Vol.-%.

Porositäten oberhalb von 80 Vol.-% wirken sich nachteilig auf die mechanischen Eigenschaften der Membranen aus. Insbesondere kommt es bei höheren Porositäten zu einer starken Abnahme der Druckstabilitäten der Hohlfasermembranen. Porositäten unterhalb von 40 Vol.-% führen zu einer deutlichen Abnahme der Permeabilitäten der Membranen, die auch durch eine Reduzierung der Trennschichtdicke nicht mehr aufgefangen werden kann. Bevorzugt sind Hohlfasermembranen mit einer Porosität im Bereich von 45 bis 60 Vol.-%.

Wie zuvor ausgeführt wurde, weisen die erfindungsgemäßen Hohlfasermembranen auf Grund ihrer besonderen Struktur eine hohe Belastbarkeit und gute mechanische Eigenschaften auf. Vorzugsweise haben die erfindungsgemäßen Membranen eine im Zugversuch ermittelte Bruchfestigkeit von mindestens 15 N/mm$^2$ und besonders bevorzugt von mindestens 19 N/mm$^2$ auf. In einer ebenfalls bevorzugten Ausführungsform haben die erfindungsgemäßen Hohlfasermembranen eine Bruchdehnung von 250 bis 600% und besonders bevorzugt eine Bruchdehnung von 300 bis 500%.

Während bei zu geringen Dicken der Trennschicht die Gefahr für Fehlstellen zu groß wird, werden andererseits bei einer zu großen Trennschichtdicke die Transferraten und die Permeabilitäten bei der Entgasung bzw. Begasung zu gering. Bevorzugt liegt daher die Dicke der Trennschicht zwischen 0,01 $\mu$m und 5 $\mu$m und besonders bevorzugt zwischen 0,1 $\mu$m und 2 $\mu$m. Hervorragend geeignet sind erfindungsgemäße Membranen mit einer Trennschichtdicke zwischen 0,1 $\mu$m und 0,6 $\mu$m. Die Dicke der Trennschicht kann für die erfindungsgemäßen Membranen auf einfache Weise durch Ausmessen der Schicht anhand von mittels Rasterelektronenmikroskopie erstellten Bruchbildern oder mittels Transmissionselektronenmikroskopie erstellten Ultradünnschnittcharakterisierungen ermittelt werden.

Die homogene, isotrope Struktur der Stützschicht mit mikroporöser Porenstruktur in Verbindung mit einer Trennschicht, deren Dicke in dem erfindungsgemäß geforderten Bereich liegt, ist ausschlaggebend für ausreichend hohe Permeabilitäten für Gase in der Anwendung der erfindungsgemäßen Membran bei der Be- und Entgasung von Flüssigkeiten. Die erfindungsgemäßen Hohlfasermembranen besitzen daher eine Permeabilität für Stickstoff von mindestens 25 ml/(cm$^2$·min·bar). Vorzugsweise beträgt die Permeabilität für Stickstoff mindestens 40 ml/(cm$^2$·min·bar).

Wie ausgeführt befindet sich bei den erfindungsgemäßen Membranen an deren Außenseite eine Trennschicht mit einer im Vergleich zur Stützschicht dichteren Struktur. Ihre äußere Oberfläche weist bei rasterelektronenmikroskopischer Untersuchung mit 5000-facher Vergrößerung eine homogene, gleichförmige Struktur auf und es sind bei dieser Vergrößerung keine Poren erkennbar. Unter einer homogenen gleichförmigen Struktur der Oberfläche wird im Rahmen der vorliegenden Erfindung eine Oberfläche verstanden, bei der keine Makrostruktur erkennbar ist mit Strukturelementen wie z.B. Sphärolithen, Partikeln oder nadelförmigen bzw. fibrillären Elementen oder mit netzwerkartigen Strukturelementen , wie sie bei Membranen auftreten, die auch an ihren Oberflächen offenporig sind. Solche an ihrer Oberfläche Strukturelemente aufweisenden Membranen sind z.B. in der WO-A-93/22034 offenbart. Die äußere Oberfläche der erfindungsgemäßen Hohlfasermembranen erscheint hingegen glatt. Bevorzugt weist sie einen mittels Rasterkraftmikroskopie (Atomic Force Microscopy) an 10x10 $\mu$m großen Ausschnitten der Membranoberfläche ermittelten Mittenrauwert R$_a$ von kleiner als 100 nm und besonders bevorzugt von kleiner als 60 nm auf.

Im Hinblick auf insbesondere die Anwendungen im Bereich der Be- und Entgasung von Flüssigkeiten weisen die erfindungsgemäßen Hohlfasermembranen vorzugsweise eine Wanddicke im Bereich von 35 bis 75 $\mu$m auf. Ebenso sind Hohlfasermembranen bevorzugt, deren Durchmesser des Lumens im Bereich von 150 bis 350 $\mu$m liegt. Derartige erfindungsgemäße Hohlfasermembranen zeigen ein besonders ausgewogenes Verhältnis bzgl. der Permeabilitäten auf der einen Seite und der mechanischen Eigenschaften auf der anderen Seite.

Die erfindungsgemäßen Hohlfasermembranen lassen sich mittels eines Verfahrens herstellen, bei dem die Membranausbildung über einen thermisch induzierten Phasenseparationsprozess erfolgt.

Die Aufgabe wird daher des Weiteren gelöst durch ein Verfahren zur Herstellung einer solchen hydrophoben Hohlfasermembran aus einem Vinylidenfluorid Homopolymer oder Copolymer, wobei das Verfahren mindestens die folgenden Schritte umfasst:

    a) Herstellung einer homogenen Lösung von 20-60 Gew.-% einer Polymerkomponente aus mindestens einem Vinylidenfluorid Homopolymer oder Copolymer, in 80-40 Gew.-% eines Lösemittelsystems, wobei die Lösung aus Polymerkomponente und Lösemittelsystem bei Abkühlung eine kritische Entmischungstemperatur und eine Erstarrungstemperatur aufweist und unterhalb der kritischen Entmischungstemperatur im flüssigen Aggregatzustand eine Mischungslücke,

    b) Ausformen der Lösung zu einer Hohlfaser mit einer äußeren Oberfläche an seiner Außenseite und einer inneren Oberfläche an seiner Innenseite in einer Hohlfaserdüse, welche eine Werkzeugtemperatur oberhalb der kritischen Entmischungstemperatur aufweist,

    c) Abkühlung der Hohlfaser mittels eines Abkühlmediums, welches auf eine Abkühltemperatur unterhalb der Erstarrungstemperatur temperiert ist, mit einer solchen Geschwindigkeit, dass eine thermodynamische Nichtgleichgewichts-flüssig-flüssig-Phasentrennung in eine polymerreiche und eine polymerarme Phase und anschließend bei Unterschreiten der Erstarrungstemperatur Erstarrung der polymerreichen Phase erfolgt,

    d) gegebenenfalls Entfernen des Lösemittelsystems aus der Hohlfaser, wobei das Verfahren dadurch gekennzeichnet ist,

- dass das Lösemittelsystem eine Verbindung A und eine Verbindung B enthält, welche bei der Lösetemperatur flüssig und homogen miteinander mischbar sind, und wobei als Verbindung A ein Löser für die Polymerkomponente ausgewählt wird und die Verbindung B ein Nichtlöser für die Polymerkomponente ist,
- dass die Hohlfaser zur Abkühlung mit ihrer äußeren Oberfläche mit einem flüssigen Abkühlmedium in Kontakt gebracht wird, welches chemisch nicht mit der Polymerkomponente reagiert und welches ein starker Nichtlöser für die Polymerkomponente ist, bei dem die Entmischungstemperatur eines Systems, bestehend aus 30 Gew.-% der Polymerkomponente, 40 Gew.-% der als Löser eingesetzten Verbindung A und 30 Gew.-% des Abkühlmediums, um mindestens 25%, bezogen auf die Erstarrungstemperatur, über der Erstarrungstemperatur dieses Systems liegt und
- dass das Abkühlmedium die Verbindung B enthält.

Überraschenderweise hat sich gezeigt, dass bei Einhaltung dieser Verfahrensbedingungen integral asymmetrische Hohlfasermembranen aus einem Vinylidenfluorid Homopolymer oder Copolymer erhalten werden, die eine mikroporöse Stützschicht und angrenzend an die Stützschicht und diese abdeckend an ihrer Außenseite eine Trennschicht besitzt, wobei die äußere Oberfläche der Hohlfasermembran eine homogene, gleichförmige Struktur und keine Poren aufweist. Hierbei hat sich gezeigt, dass insbesondere die Auswahl des Abkühlmediums Einfluss auf die Ausbildung der Membranstruktur und in besonderem Maße auf die Ausbildung der Oberflächenstruktur hat.

Das erfindungsgemäße Verfahren beruht auf einem thermisch induzierten Phasenseparationsprozess mit flüssig-flüssig-Phasentrennung. Erfindungsgemäß bilden die Polymerkomponente und das die Verbindungen A und B enthaltende Lösemittelsystem ein binäres System, das im flüssigen Aggregatzustand einen Bereich aufweist, in dem das System als homogene Lösung vorliegt, und einen Bereich, in dem es eine Mischungslücke besitzt. Wird ein solches System aus dem Bereich, in dem es als homogene Lösung vorliegt, unter die kritische Entmischungs- oder Phasentrenntemperatur abgekühlt, so tritt zunächst eine flüssig-flüssig Entmischung bzw. Phasentrennung in zwei flüssige Phasen auf, nämlich in eine polymerreiche und eine polymerarme Phase. Bei weiterer Abkühlung bis unter die Erstarrungstemperatur erstarrt die polymerreiche Phase zur dreidimensionalen Membranstruktur. Im Rahmen der vorliegenden Erfindung liegt die Erstarrungstemperatur des Systems aus Polymerkomponente und Verbindungen A und B vorzugsweise oberhalb von 50°C und besonders bevorzugt oberhalb von 100°C. Ist die Abkühlgeschwindigkeit genügend groß, dass die flüssig-flüssig-Phasentrennung nicht unter thermodynamischen Gleichgewichtsbedingungen erfolgen kann sondern unter thermodynamischen Nichtgleichgewichtsbedingungen, jedoch andererseits dennoch relativ langsam, erfolgt die flüssig-flüssig-Phasentrennung etwa gleichzeitig mit der Ausbildung einer Vielzahl von Flüssigkeitströpfchen von im wesentlichen gleicher Größe. Das resultierende Polymergebilde weist dann eine schwammartige zellförmige und offenporige Mikrostruktur auf. Die verschiedenartige Ausbildung solcher schwammartiger mikroporöser Strukturen über Prozesse mit thermisch induzierter flüssig-flüssig-Phasentrennung werden eingehend in der DE-A 27 37 745 beschrieben, auf deren Offenbarung sich ausdrücklich bezogen wird, und z.B. in R.E. Kesting: "Synthetic Polymeric Membranes", John Wiley & Sons, 1985, S. 261-264, dargestellt.

Im Rahmen der vorliegenden Erfindung werden als membranbildende Polymere Vinylidenfluorid-Homopolymere oder Vinylidenfluorid-Copolymere eingesetzt. Als Vinylidenfluorid-Copolymere kommen Copolymere von Vinylidenfluorid mit mindestens einem weiteren Bestandteil, ausgewählt aus der Gruppe der Ethylentetrafluoride, Propylenhexafluoride, Ethylentrifluoride, Ethylentrifluorid-Chloride, Vinylfluorid und Ethylen in Frage. Auch Mischungen von zwei oder mehreren der Vinylidenfluorid-Homopolymere und/oder -Copolymere können eingesetzt werden. Vorzugsweise werden im Rahmen der vorliegenden Erfindung Vinylidenfluorid-Homopolymere eingesetzt. Bevorzugt weisen die Vinylidenfluorid-Homopolymere oder Vinylidenfluorid-Copolymere ein über Gelpermeationschromatographie gemessenes mittleres Molekulargewicht $M_W$ von mindestens $1 \times 10^5$ Dalton auf. Bei mittleren Molekulargewichten $M_W$ kleiner als $1 \times 10^5$ Dalton haben die damit hergestellten Lösungen zur Herstellung der Hohlfasermembranen eine zu geringe Viskosität und die damit hergestellten Hohlfasermembranen verschlechterte mechanische Eigenschaften. Besonders bevorzugt sind mittlere Molekulargewichte $M_W$ im Bereich von $1,5 \times 10^5$ bis $1 \times 10^6$ Dalton. Im Falle der Verwendung von Mischungen von zwei oder mehreren Vinylidenfluorid-Homopolymer- und/oder -Copolymerkomponenten können diese auch unterschiedliche Molekulargewichte aufweisen. Sofern erforderlich, können die Vinylidenfluorid-Homopolymere oder Vinylidenfluorid-Copolymere auch Additive wie z.B. Antioxidantien, UV-Absorber, Gleitmittel oder Nukleierungsmittel enthalten.

Die eingesetzten Zusammensetzungen aus der Polymerkomponente, der Verbindung A und der Verbindung B, wobei die Verbindungen A und B zusammen das Lösemittelsystem ausbilden, müssen gemeinsam in eine einzige homogene flüssige Phase überführbar sein und eine kritische Entmischungstemperatur aufweisen, unterhalb derer eine Phasentrennung in zwei flüssige Phasen auftritt. Diese liegt jedoch höher als die Entmischungstemperatur einer Lösung, die gleiche Anteile Polymer, jedoch als Lösemittelsystem nur die Verbindung A enthält. Bei Systemen Polymerkomponente/Verbindung A mit Mischungslücke im flüssigen Aggregatzustand wird also durch den Zusatz der Verbindung B die kritische Entmischungstemperatur heraufgesetzt. Durch Zugabe der Verbindung B wird eine gezielte Steuerung der Porengröße und des Porenvolumens der erhaltenen porösen Strukturen ermöglicht.

Als Verbindung A sind solche Verbindungen einzusetzen, die Lösemittel für die Polymerkomponente sind und in der diese Polymerkomponente bei Erwärmen bis höchstens zum Siedepunkt dieser Verbindung zu einer homogenen Lösung vollständig gelöst wird. Als Verbindung B wird erfindungsgemäß eine solche Verbindung ausgewählt, die ein Nichtlöser für die Polymerkomponente ist. Unter einem Nichtlöser für die Polymerkomponente wird dabei generell im Rahmen der vorliegenden Erfindung eine Verbindung verstanden, welche die Polymerkomponente in einer Konzentration von 1 Gew.-% in dem Nichtlöser beim Erwärmen bis höchstens zum Siedepunkt dieses Nichtlösers nicht zu einer homogenen Lösung auflöst.

Dabei kann die Verbindung A zusätzlich mit weiteren Lösern verschnitten sein. Auch die Verbindung B kann in Mischung mit weiteren Nichtlösern eingesetzt werden. Infolgedessen wird im Rahmen der vorliegenden Erfindung unter der Verbindung A nicht nur eine einzelne Verbindung verstanden, sondern auch eine Mischung verschiedener Löser, solange die Gesamtwirkung als Löser erhalten bleibt. Ebenso wird unter der Verbindung B auch eine Mischung verschiedener Nichtlöser verstanden, solange die Wirkung als Nichtlöser erhalten bleibt.

Als Verbindung A, d.h. als Löser für das mindestens eine Vinylidenfluorid Homopolymer oder Copolymer, werden vorzugsweise Glycerintriacetat, Glycerindiacetat, 2-(2-Butoxyethoxy-)ethylacetat, Dibutylphtalat, Adipinsäurediethylester, Adipinsäuredibutylether, Butyldiglykolacetat, Butylglykolacetat, Glykoldiacetat, Propylencarbonat, Butyrolacton oder ε-Caprolactam oder Gemische aus den erwähnten Verbindungen eingesetzt. Besonders bevorzugt wird Glycerintriacetat oder eine Mischung aus Glycerintriacetat und ε-Caprolactam als Verbindung A eingesetzt. Als Verbindung B, d.h. als Nichtlöser für die Polymerkomponente, sind Dioctyladipat, Gylcerinmonoacetat, Glycerin, Glykol, Diglykol oder Rizinusöl oder Mischungen hiervon gut geeignet. besonders bevorzugt ist die Verwendung von Dioctyladipat oder Rizinusöl oder Mischungen hiervon.

Der zur Membranherstellung erforderliche Anteil an Polymer sowie das Verhältnis von Verbindung A zu Verbindung B im Lösemittelsystem lässt sich durch Erstellung von Phasendiagrammen mittels einfacher Versuche ermitteln. Derartige Phasendiagramme können nach bekannten Methoden entwickelt werden, wie sie z.B. von C.A. Smolders, J.J. van Aartsen, A. Steenbergen, Kolloid-Z. und Z. Polymere, 243 (1971), S. 14-20, beschrieben werden. In der Regel ist bei einem vorgegebenen Löser A der Anteil an Verbindung B, d.h. an Nichtlöser, in der Mischung aus der Polymerkomponente, der Verbindung A und der Verbindung B abhängig von der Stärke des Nichtlöser, d.h. der Verbindung B. Bevorzugt ist der Anteil der Verbindung B im Lösemittelsystem 1 bis 45 Gew.-%.

Erfindungsgemäß liegt die Konzentration des mindestens einen Vinylidenfluorid Homopolymeren oder Copolymeren in der homogenen Lösung bei 20-60 Gew.-% und die Konzentration des Lösemittelsystems bei 80-40 Gew.-%. In einer bevorzugten Ausgestaltung des erfindungsgemäßen Verfahrens beträgt der Anteil der Polymerkomponente 30-50 Gew.-% und der Anteil des Lösemittelsystems, bestehend aus den Verbindungen A und B, 70-50 Gew.-%. Gegebenenfalls können der Polymerkomponente, den Verbindungen A und B oder auch der Polymerlösung weitere Stoffe wie z.B. Antioxidantien, Keimbildungsmittel, Füllstoffe, Komponenten zur Verbesserung der Biokompatibilität, d.h. der Blutverträglichkeit bei Einsatz der Membran bei der Oxigenation, z.B. Vitamin E, und ähnliche als Additive zugegeben werden.

Zur Ausbildung der Hohlfasermembranen wird die Polymerlösung durch den Ringspalt einer Hohlfadendüse extrudiert und der Hohlfaden ausgebildet. Durch die zentrale Bohrung der Hohlfadendüse wird ein Fluid dosiert, das als Innenfüllung fungiert, die das Lumen des Hohlfadens bzw. der Hohlfasermembran ausbildet und stabilisiert. Der extrudierte Hohlfaden bzw. die resultierende Hohlfasermembran weist dann eine dem Lumen zugewandte Oberfläche, die Innenoberfläche, und eine dem Lumen abgewandte, durch die Wand des Hohlfadens bzw. der Hohlfasermembran von der Innenoberfläche getrennte Oberfläche, die Außenoberfläche auf.

Als Innenfüllung kommen Flüssigkeiten wie z.B. Glycerin oder eine 1:1 Mischung aus Dioctyladipat und Rizinusöl oder auch Gase wie z.B. Stickstoff oder Luft in Frage. Bevorzugt wird als Innenfüllung Stickstoff verwendet.

Erfindungsgemäß wird die Hohlfaser nach ihrer Ausformung in der Hohlfaserdüse zur Abkühlung mit ihrer äußeren Oberfläche mit einem flüssigen Abkühlmedium in Kontakt gebracht wird, welches chemisch nicht mit der Polymerkomponente reagiert, welches ein starker Nichtlöser für die Polymerkomponente ist und welches die Verbindung B enthält, die auch zu Herstellung der homogenen Lösung aus Polymerkomponente und Lösemittelsystem eingesetzt wurde. Dabei ist im Rahmen der vorliegenden Erfindung das flüssige Abkühlmedium dann als starker Nichtlöser einzustufen, wenn die Entmischungstemperatur eines Systems, bestehend aus 30 Gew.-% der Polymerkomponente, 40 Gew.-% der als Löser eingesetzten Verbindung A und 30 Gew.-% des Abkühlmediums, um mindestens 25%, bezogen auf die Erstarrungstemperatur, über der Erstarrungstemperatur dieses Systems liegt.

Dabei kann die Entmischungs- oder Phasentrenntemperatur auf einfache Weise ermittelt werden, indem zunächst eine homogene Lösung aus 30 Gew.-% der Polymerkomponente in 40 Gew.-% der als Löser eingesetzten Verbindung A und 30 Gew.-% des flüssigen Abkühlmediums hergestellt und diese Lösung dann auf eine Temperatur aufgeheizt wird, die ca. 20°C oberhalb der Lösetemperatur liegt. Die Lösung wird dann ca. 0,5 Std. unter Rühren auf dieser Temperatur gehalten, um eine hinreichende Homogenität zu gewährleisten. Anschließend wird die Lösung mit einer Abkühlrate von 1°C/min unter Rühren abgekühlt. Als Phasentrenntemperatur wird dabei die Temperatur bestimmt, bei der visuell eine beginnende Trübung feststellbar ist. Bei weiterer Abkühlung tritt bei der Erstarrungstemperatur ein Festwerden der polymerreichen Phase ein.

Für die Ausbildung der für die erfindungsgemäßen Hohlfasermembranen geforderten Struktur ist die Stärke der Nichtlösereigenschaft des Abkühlmediums in Bezug auf die Polymerkomponente von ausschlaggebender Bedeutung. Abkühlmedien, die die anspruchsgemäße Bedingung erfüllen, die also in der Terminologie der vorliegenden Erfindung ein starken Nichtlöser in Bezug auf die Polymerkomponente sind, führen zu der erfindungsgemäßen Struktur. Abkühlmedien, die zwar Nichtlöser für die Polymerkomponente sind, die anspruchsgemäße Bedingung jedoch nicht erfüllen, d.h. für die die Entmischungstemperatur eines Systems, bestehend aus 30 Gew.-% der Polymerkomponente, 40 Gew.-% der als Löser eingesetzten Verbindung A und 30 Gew.-% des Abkühlmediums, um weniger als 25%, bezogen auf die Erstarrungstemperatur, über der Erstarrungstemperatur dieses Systems liegt, sind demnach schwache Nichtlöser und führen nicht zu der erfindungsgemäßen Struktur. In einer bevorzugten Ausführungsform des erfindungsgemäßen Verfahrens ein Abkühlmedium eingesetzt, für das die Entmischungstemperatur eines Systems, bestehend aus 30 Gew.-% der Polymerkomponente, 40 Gew.-% der als Löser eingesetzten Verbindung A und 30 Gew.-% des Abkühlmediums, um mindestens 40%, bezogen auf die Erstarrungstemperatur, über der Erstarrungstemperatur dieses Systems liegt.

Es wurde festgestellt, dass in Fällen, bei denen als Abkühlmedium ein schwacher Nichtlöser eingesetzt wird oder auch ein Löser, der beispielsweise die Polymerkomponente bei Temperaturen bei oder oberhalb der Werkzeugtemperatur löst, die resultierende Membran nicht mehr die geforderte Struktur aufweist. Mit geringer werdender Temperaturdifferenz, d.h. mit abnehmender Stärke des Nichtlösecharakters des Abkühlmediums treten nämlich in zunehmendem Maße sphärolithische Strukturen in der äußeren Oberfläche und auch in der Membranwand auf. Dies führt vor allem zu unzureichenden mechanischen Eigenschaften der Hohlfasermembranen und insbesondere zu vergleichsweise geringen Bruchdehnungen.

Erfindungswesentlich ist, dass das Abkühlmedium die Verbindung B enthält. Hierdurch kann es zu einem für die Ausbildung der erfindungsgemäßen Membranstruktur und insbesondere für die Ausbildung der Trennschicht und die Struktur der äußeren Oberfläche der erfindungsgemäßen Membran besonders förderlichen Stoffaustausch zwischen dem aus der Hohlfadendüse extrudierten Hohlfaden und dem Abkühlmedium kommen. In einer besonders bevorzugten Ausführungsform beträgt der Anteil der Verbindung B im Abkühlmedium mindestens 50 Gew.-%.

Besonders vorteilhaft ist es, wenn die Verbindung B selbst ein starker Nichtlöser für die Polymerkomponente ist, wobei hierbei in analoger Weise wie für das Abkühlmedium als Bedingung für einen starken Nichtlöser gilt, dass die Entmischungstemperatur eines Systems, bestehend aus 30 Gew.-% der Polymerkomponente, 40 Gew.-% der als Löser eingesetzten Verbindung A und 30 Gew.-% der Verbindung B, um mindestens 25%, bezogen auf die Erstarrungstemperatur, über der Erstarrungstemperatur dieses Systems liegt.

In einer weiteren bevorzugten Ausgestaltung des erfindungsgemäßen Verfahrens besteht das Abkühlmedium aus einer homogenen Mischung von Komponenten, die jede für sich ein Nichtlöser für die Polymerkomponente sind, wobei die Gesamtheit der Komponenten, d.h. das daraus gebildete Abkühlmedium natürlich ein starker Nichtlöser für die Polymerkomponente sein muss und die erfindungsgemäß geforderte Bedingung hinsichtlich der Differenz zwischen der Entmischungstemperatur und der Erstarrungstemperatur erfüllen muss.

Für die Durchführung des erfindungsgemäßen Verfahrens ist es insbesondere im Hinblick auf die Stabilität des extrudierten Hohlfadens von Vorteil, wenn das Abkühlmedium bei 23°C eine Viskosität im Bereich von 15 bis 200 mPa s aufweist. Bei Verwendung von Abkühlmedien mit derartigen Viskositäten wird bei der Durchführung des erfindungsgemäßen Verfahrens ein besonders stabiler Lauf der ausgeformten Hohlfaser durch das Abkühlmedium erreicht.

In einer bevorzugten Ausgestaltung des erfindungsgemäßen Verfahrens besteht das Abkühlmedium aus Dioctyladipat oder aus Mischungen von Dioctyladipat mit Rizinusöl. Besonders geeignet sind Mischungen aus Dioctyladipat und Rizinusöl, bei denen der Anteil an Dioctyladipat im Bereich von 75 bis 95 Gew.-% liegt. Durch den Anteil an Rizinusöl kann eine gezielte Einstellung der Viskosität des Abkühlmediums vorgenommen werden.

Es hat sich als vorteilhaft erwiesen, wenn zwischen der Austrittsfläche der Hohlfaserdüse und dem Abkühlmedium ein Luftspalt vorhanden ist. Dadurch wird die erforderliche Temperaturkonstanz an der Hohlfaserdüse leichter erzielt, als wenn sich die Hohlfaserdüse im direkten Kontakt mit dem kälteren Abkühlmedium steht. Der Luftspalt beträgt bevorzugt 5 bis 40 mm und besonders bevorzugt 8 bis 15mm.

Zur Einleitung einer thermodynamischen Nichtgleichgewichts-flüssig-flüssig-Phasentrennung muss die Temperatur des Abkühlmediums deutlich unterhalb der kritischen Entmischungstemperatur oder Phasentrenntemperatur der verwendeten Polymerlösung und im weiteren zur Erstarrung der polymerreichen Phase unterhalb der Erstarrungstemperatur liegen. Hierbei wird die Ausbildung der Trennschicht unterstützt, wenn ein möglichst großer Abstand zwischen der Entmischungstemperatur und der Temperatur des Abkühlmediums besteht. Vorzugsweise weist das Abkühlmedium eine Temperatur auf, die um mindestens 100°C unterhalb der Phasentrenntemperatur liegt, und besonders bevorzugt eine Temperatur, die um mindestens 150°C unterhalb der Phasentrenntemperatur liegt. Es ist von besonderem Vorteil, wenn dabei die Temperatur des Abkühlmediums kleiner als 50°C ist. In Einzelfällen kann eine Kühlung auf Temperaturen unterhalb der Raumtemperatur erforderlich sein.

Vorzugsweise wird die Hohlfaser nach Austritt aus der Hohlfaserdüse zur Abkühlung durch einen Schacht oder ein Spinnrohr geführt, in dem sich das Abkühlmedium befindet. Hierbei werden das Abkühlmedium und die Hohlfaser in der Regel in die gleiche Richtung durch den Schacht bzw. das Spinnrohr geführt. Vorzugsweise durchlaufen Hohlfaser und Abkühlmedium den Schacht bzw. das Spinnrohr in die gleiche Richtung, wobei die mittlere lineare Geschwindigkeit des Abkühlmediums mindestens um 20% und besonders bevorzugt mindestens um 40% kleiner ist als die Abzugsgeschwindigkeit des ausgeformten Hohlfadens durch den Schacht bzw. das Spinnrohr. Hierbei wird unter der mittleren linearen Geschwindigkeit des Abkühlmediums der auf den Querschnitt des Schachts bzw. des Spinnrohrs bezogene Volumenstrom des Abkühlmediums durch den Schacht bzw. das Spinnrohr verstanden. Derartige Verfahrensvarianten werden beispielsweise in der DE-A-28 33 493 oder in der EP-A-133 882 beschrieben.

Nach Abkühlung und Verfestigung der Polymerstruktur und damit der Membranstruktur werden die Verbindungen A und B in der Regel aus dem Formkörper entfernt. Die Entfernung kann beispielsweise durch Extraktion erfolgen. Vorzugsweise werden dabei solche Extraktionsmittel eingesetzt, die das Polymer bzw. die Polymeren nicht lösen, die jedoch mischbar mit den Verbindungen A und B sind. Anschließend kann eine Trocknung bei erhöhten Temperaturen erforderlich sein, um das Extraktionsmittel aus der Membran zu entfernen. Brauchbare Extraktionsmittel sind Aceton, Methanol, Ethanol und bevorzugt Isopropanol.

Die Erfindung soll anhand der nachfolgenden Beispiele und Figuren näher erläutert werden. Es zeigen:

Fig. 1: Rasterelektronenmikroskopische (REM-) Aufnahme der Bruchfläche einer Hohlfasermembran gemäß Beispiel 1 senkrecht zu ihrer Längsachse bei 1000-facher Vergrößerung.

Fig. 2: Rasterelektronenmikroskopische (REM-) Aufnahme der äußeren Oberfläche einer Hohlfasermembran gemäß Beispiel 1 bei 5000-facher Vergrößerung.

Fig. 3: Rasterelektronenmikroskopische (REM-) Aufnahme der Bruchfläche einer Hohlfasermembran gemäß Beispiel 1 senkrecht zu ihrer Längsachse bei 5000-facher Vergrößerung.

Fig. 4: Über Rasterkraftmikroskopie (Atomic Force Microscopy) ermittelte 3D- Ansicht einer 10x10 μm Probe der äußeren Oberfläche einer Hohlfasermembran gemäß Beispiel 1.

Fig. 5: Rasterelektronenmikroskopische (REM-) Aufnahme der Bruchfläche einer Hohlfasermembran gemäß Beispiel 2 senkrecht zu ihrer Längsachse bei 1000-facher Vergrößerung.

Fig. 6: Rasterelektronenmikroskopische (REM-) Aufnahme der Bruchfläche einer Hohlfasermembran gemäß Beispiel 2 senkrecht zu ihrer Längsachse bei 5000-facher Vergrößerung, Ausschnitt im Bereich der Außenseite.

Fig. 7: Rasterelektronenmikroskopische (REM-) Aufnahme der äußeren Oberfläche einer Hohlfasermembran gemäß Beispiel 2 bei 5000-facher Vergrößerung.

Fig. 8: Rasterelektronenmikroskopische (REM-) Aufnahme der Bruchfläche einer Hohlfasermembran gemäß Vergleichsbeispiel 1 senkrecht zu ihrer Längsachse bei 1000-facher Vergrößerung.

Fig. 9: Rasterelektronenmikroskopische (REM-) Aufnahme der äußeren Oberfläche einer Hohlfasermembran gemäß Vergleichsbeispiel 1 bei 2000-facher Vergrößerung.

Fig. 10: Über Rasterkraftmikroskopie (Atomic Force Microscopy) ermittelte 3D- Ansicht einer 10x10 μm Probe der äußeren Oberfläche einer Hohlfasermembran gemäß Vergleichsbeispiel 1.

Fig. 11: Rasterelektronenmikroskopische (REM-) Aufnahme der Bruchfläche einer Hohlfasermembran gemäß Vergleichsbeispiel 2 senkrecht zu ihrer Längsachse bei 1000-facher Vergrößerung.

Fig. 12: Rasterelektronenmikroskopische (REM-) Aufnahme der äußeren Oberfläche einer Hohlfasermembran gemäß Vergleichsbeispiel 2 bei 2000-facher Vergrößerung.

In den Beispielen wurden die folgenden Methoden zur Charakterisierung der erhaltenen Membranen angewandt:

Bestimmung der Volumenporosität:

Eine Probe von mindestens 0,5 g der zu untersuchenden Membran wird trocken eingewogen. Die Membranprobe wird anschließend in eine das Membranmaterial benetzende, jedoch nicht quellende Flüssigkeit für 24 Stunden eingelegt, so dass die Flüssigkeit in alle Poren eindringt. Dies lässt sich visuell daran erkennen, dass die Membranprobe von einem opaken in einen glasigen, transparenten Zustand übergeht. Anschließend wird die Membranprobe aus der Flüssigkeit entnommen, an der Membranprobe anhaftende Flüssigkeit durch Zentrifugieren bei ca. 1800 g entfernt und die Masse der so vorbehandelten nassen, d.h. flüssigkeitsgefüllten Membranprobe bestimmt.

Die Volumenporosität in % wird nach folgender Formel bestimmt:

$$\text{Volumenporosität [\%]} = 100 \cdot \frac{(m_{nass} - m_{trocken})/\rho_{Flüss.}}{(m_{nass} - m_{trocken})/\rho_{Flüss.} + m_{trocken}/\rho_{Polymer}}$$

wobei bedeuten:

| | | |
|---|---|---|
| $m_{trocken}$ | = | Gewicht der trockenen Membranprobe |
| $m_{nass}$ | = | Gewicht der nassen, flüssigkeitsgefüllten Membranprobe |
| $\rho_{Flüss.}$ | = | Dichte der verwendeten Flüssigkeit |
| $\rho_{Polymer}$ | = | Dichte des Membranpolymers |

Bestimmung der Permeabilität für Stickstoff:

Aus ca. 15 bis 20 Hohlfasermembranstücken mit einer Länge von jeweils ca. 30 cm wird eine Prüfzelle gefertigt. Die Hohlfasern werden dafür in Schlaufen gelegt und beidseitig an ihren Enden in ein Polyurethanharz eingebettet. Nach dem Aushärten des Harzes werden die Einbettungen auf eine Länge von ca. 30 mm geschnitten, wobei die Lumina der Hohlfasermembranen durch den Schnitt geöffnet werden. Die Hohlfaserlumina in den Einbettungen müssen auf Durchgängigkeit überprüft werden. Die Prüfzelle wird in eine Prüfapparatur eingebunden und mit einem definiertem Prüfdruck von 2,0 bar mit Stickstoff beaufschlagt.
Es wird der durch die Wand der Membranprobe hindurchtretende Volumenstrom des Gases ermittelt und bezüglich des Prüfdrucks sowie der vom Gas durchströmten Fläche der Membranprobe normiert, wobei die Außenfläche der Hohlfasermembranen eingesetzt wird. Die sich in ml/(cm²·min·bar) ergebende Größe ist die Permeabilität für Stickstoff.

Bestimmung der Bruchkraft und der Bruchdehnung:

Die Messung der Bruchkraft der Hohlfasermembranen erfolgt mit einer üblichen Universalprüfmaschine der Fa. Zwick, Ulm.
Die Hohlfasermembranprobe wird mit konstanter Geschwindigkeit in Längsrichtung bis zum Bruch gedehnt. Die dafür benötigte Kraft wird in Abhängigkeit der Längenänderung gemessen und in einem Kraft-Dehnungsdiagramm festgehalten. Die Messung erfolgt als Mehrfachbestimmung an mehreren Hohlfasermembranproben bei 100 mm Einspannlänge und bei einer Zuggeschwindigkeit von 500 mm/min. Das Vorspanngewicht beträgt 2,5 cN. Die zum Bruch benötigte Kraft BK wird als gemittelter Zahlenwert in cN ausgegeben.
Die Bruchfestigkeit $\sigma_B$ der Hohlfasermembranprobe wird durch Normierung der Bruchkraft BK auf die Querschnittsfläche $A_Q$ der Membranwand erhalten.

Ermittlung des Mittenrauhwerts $R_a$:

Mittels Rasterkraftmikroskopie (Atomic Force Microscopy) wird von einem 10x10 μm großen Feld der Membranoberfläche mit einer sehr feinen Nadel die Topographie der Oberfläche untersucht und eine vollständige dreidimensionale Information über die Topographie der Oberfläche erhalten. Aus den erhaltenen Messdaten werden in Anlehnung an die DIN EN ISO 4287 die Rauheitsparameter berechnet. Zur Kennzeichnung der Oberflächenrauheit der vorliegenden Hohlfasermembranen wird der Mittenrauwert $R_a$ bestimmt als der arithmetische Mittelwert der Beträge der Abstände aller Profilwerte des über die Fläche ermittelten Rauheitsprofils von der Mittellinie.

Beispiel 1:

In einem Extruder wurde PVDF-Granulat der Type Solef 1012 von Solvay Solexis bei 235 - 245°C aufgeschmolzen. Die Polymerschmelze wurde in einem Mischer mit einem Lösemittelsystem, bestehend aus 50 Gew.-% Glycerintriacetat (Komponente A) und 50 Gew.-% Dioctyladipat (Komponente B) bei 230 - 245°C vermischt und anschließend zu einer homogenen Lösung verarbeitet. Es wurde ein Polymeranteil von 35 Gew.-% eingestellt.

Diese Lösung wurde einer auf 220°C temperierten Hohlfadendüse zugeführt und oberhalb der Phasentrenntemperatur zu einem Hohlfaden extrudiert. Als Innenfüllung wurde Stickstoff verwendet. Nach einer Luftstrecke von 5 mm durchlief der Hohlfaden ein ca. 2 m langes Spinnrohr, welches von einem auf Raumtemperatur temperiertem Abkühlmedium durchströmt wurde. Als Abkühlmedium wurde eine Mischung von Dioctyladipat und Rizinusöl im Verhältnis 90:10 eingesetzt. Für dieses Abkühlmedium liegt die Entmischungstemperatur des aus 30 Gew.-% der Polymerkomponente, 40 Gew.-% der als Löser eingesetzten Verbindung A (Glycerintriacetat) und 30 Gew.-% des Abkühlmediums bestehenden Systems um ca. 53%, bezogen auf die Erstarrungstemperatur, über der Erstarrungstemperatur dieses Systems.

Der infolge der Abkühlung im Spinnrohr verfestigte Hohlfaden wurde mit einer Abzugsgeschwindigkeit von 70 m/min aus dem Spinnrohr abgezogen, auf eine Spule aufgewickelt, anschließend zunächst mit ca. 60°C warmen Isopropanol extrahiert und danach bei ca. 115°C in einem Konvektionsofen online getrocknet.

Die so hergestellten Hohlfasermembranen hatten einen Außendurchmesser von 304 $\mu$m und eine Wandstärke von 43 $\mu$m. Für die Stickstoffpermeabilität wurde ein Wert von 40 ml/(cm$^2$·min·bar) ermittelt. Die Bruchfestigkeit der Hohlfasermembran betrug 26 N/mm$^2$, die Bruchdehnung 429%.

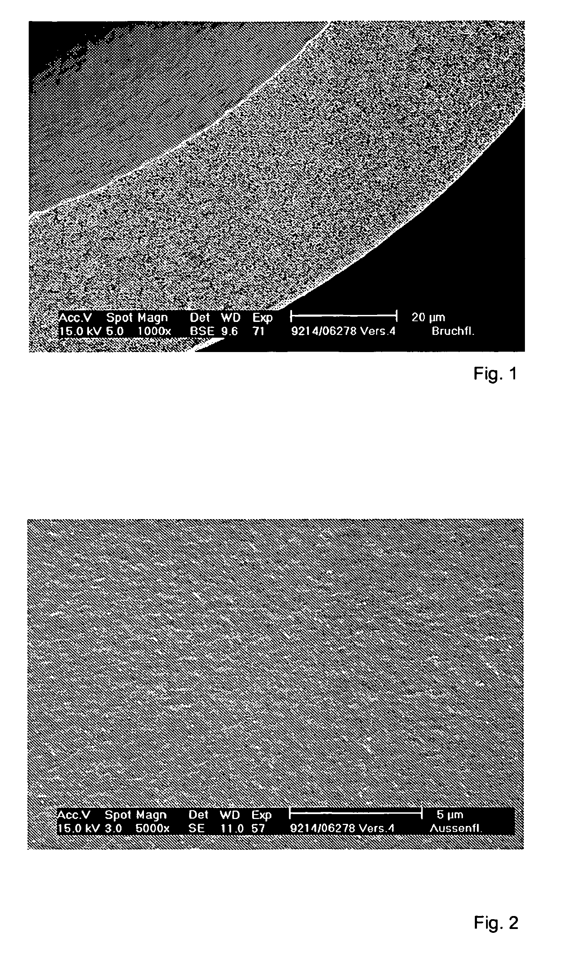

Ausweislich der rasterelektronenmikroskopischen (REM-) Untersuchung der Bruchfläche der Hohlfasermembran besaß diese Hohlfasermembran über ihrer Wand eine sehr feinporige Struktur (Fig. 1). REM-Aufnahmen der äußeren Oberfläche der Membran bei 5000facher Vergrößerung zeigen eine homogene, gleichförmige und verhältnismäßig ebene Struktur der Oberfläche, die darüber hinaus ohne Poren ist (Fig. 2).

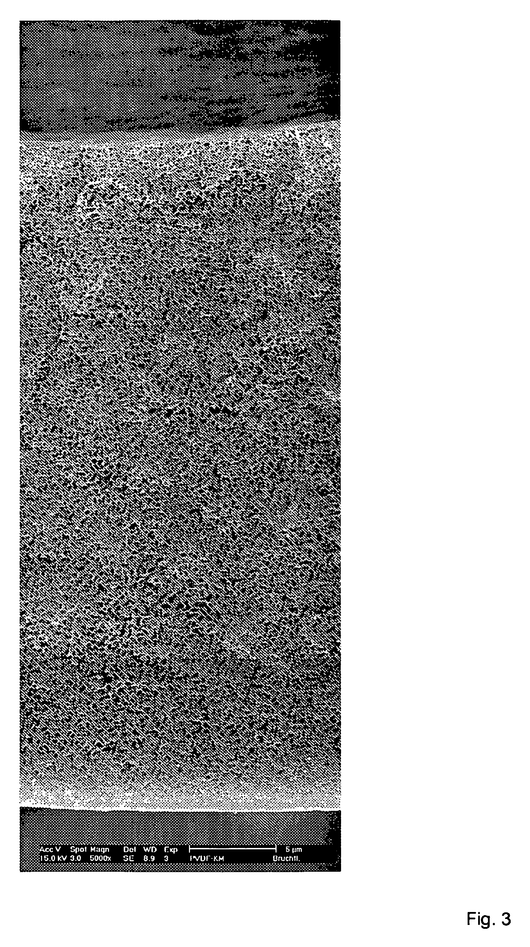

Die REM-Aufnahme des Gesamt-Querschnitts der Membranwand bei 5000facher Vergrößerung zeigt deutlich eine über im wesentlichen den gesamten Querschnitt sich erstreckende von Fingerporen freie, mikroporöse Stützschicht mit schwammartiger, offenporiger und über der Wanddicke im wesentlichen isotroper Porenstruktur, wobei die Poren in dieser Stützschicht im Mittel eine Größe von unter 0,1 $\mu$m aufweisen (Fig. 3). An der am unteren Bildrand der Fig. 3 sich befindenden äußeren Oberfläche der Membran ist eine ca. 0,15 $\mu$m dicke Trennschicht zu erkennen.

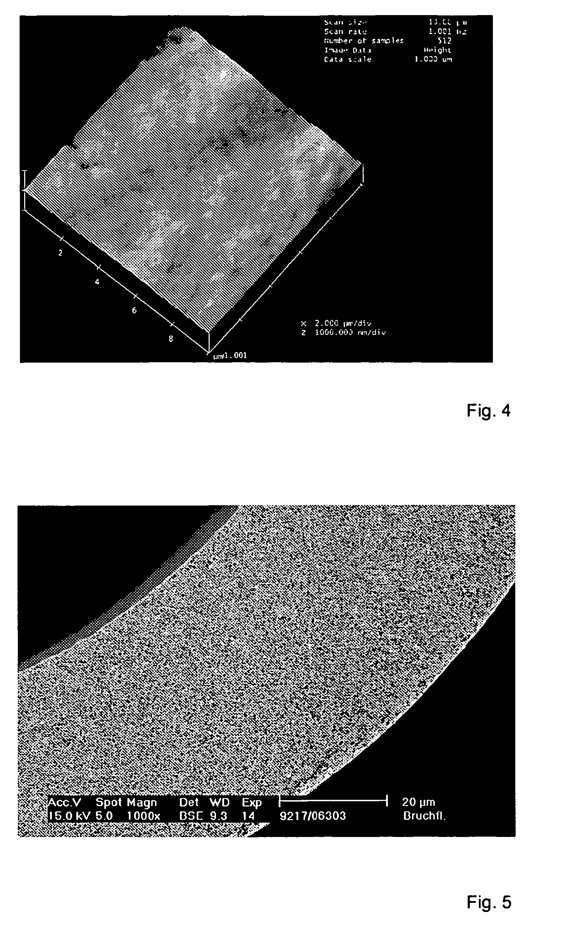

Bei der Untersuchung der äußeren Oberfläche der Hohlfasermembran mittels Rasterkraftmikroskopie (Atomic Force Microscopy) wurde ein Mittenrauwert $R_a$ von 40 nm ermittelt. Fig. 4 zeigt eine 3D-Ansicht einer 10x10 $\mu$m Probe der äußeren Hohlfasermembranoberfläche, die eine gleichmäßige und ebene Oberflächenstruktur erkennen lässt.

Beispiel 2:

Es wurde eine Hohlfasermembran wie in Beispiel 1 hergestellt, wobei als Lösemittelsystem eine Mischung aus 40 Gew.-% Glycerintriacetat und 60 Gew.-% Dioctyladipat verwendet wurde. Die Polymerkonzentration wurde ebenfalls auf 35 Gew.-% eingestellt. Auf Grund des höheren Anteils an Dioctyladipat weist die Polymerlösung dieses Beispiels im Vergleich zu der des Beispiels 1 eine höhere Entmischungstemperatur auf.

Die Hohlfasermembran hatte einen Außendurchmesser von 350 $\mu$m und eine Wandstärke von 51 $\mu$m. Für die Stickstoffpermeabilität wurde ein Wert von 46 ml/(cm$^2$·min·bar) ermittelt. Die Bruchfestigkeit der Hohlfasermembran betrug 19,6 N/mm$^2$, die Bruchdehnung 366%.

Ausweislich der rasterelektronenmikroskopischen (REM-) Untersuchung der Bruchfläche der Hohlfasermembran zeigt diese über der Wand ebenfalls eine sehr feinporige Struktur (Fig. 5).

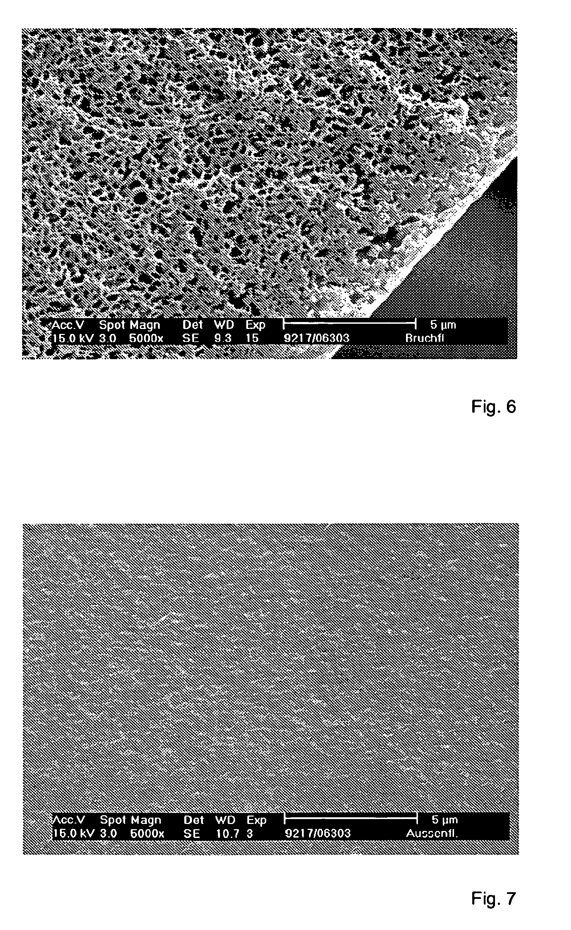

Entsprechend Fig. 6, die einen Ausschnitt aus dem äußeren Bereich der Membranwand zeigt, besaß die Membran an ihrer äußeren Oberfläche eine Trennschicht mit einer Dicke von ca. 0,1 $\mu$m. Die REM-Aufnahme der Außenoberfläche der Membran bei 5000facher Vergrößerung zeigen wie für die Membran des Beispiels 1 eine homogene, gleichförmige und verhältnismäßig ebene Struktur der Oberfläche, die darüber hinaus ohne Poren ist (Fig. 7). Der über Rasterkraftmikroskopie (Atomic Force Microscopy) ermittelte Mittenrauwert $R_a$ entspricht dem der Membran des Beispiels 1.

Vergleichsbeispiel 1:

Es wurde eine Hohlfasermembran wie in Beispiel 1 hergestellt, jedoch wurde als Abkühlmedium eine Mischung aus Glycerintriacetat und Dioctyladipat im Verhältnis 50:50 verwendet. Für dieses Abkühlmedium liegt die Entmischungstemperatur des aus 30 Gew.-% der Polymerkomponente, 40 Gew.-% der als Löser eingesetzten Verbindung A (Glycerintriacetat) und 30 Gew.-% des Abkühlmediums bestehenden Systems um ca. 5%, bezogen auf die Erstarrungstemperatur, über der Erstarrungstemperatur dieses Systems.

Die Hohlfasermembran hatte einen Außendurchmesser von 313 $\mu$m und eine Wandstärke von 49 $\mu$m. Für die Stickstoffpermeabilität resultierte ein Wert von 75 ml/(cm$^2$·min·bar).

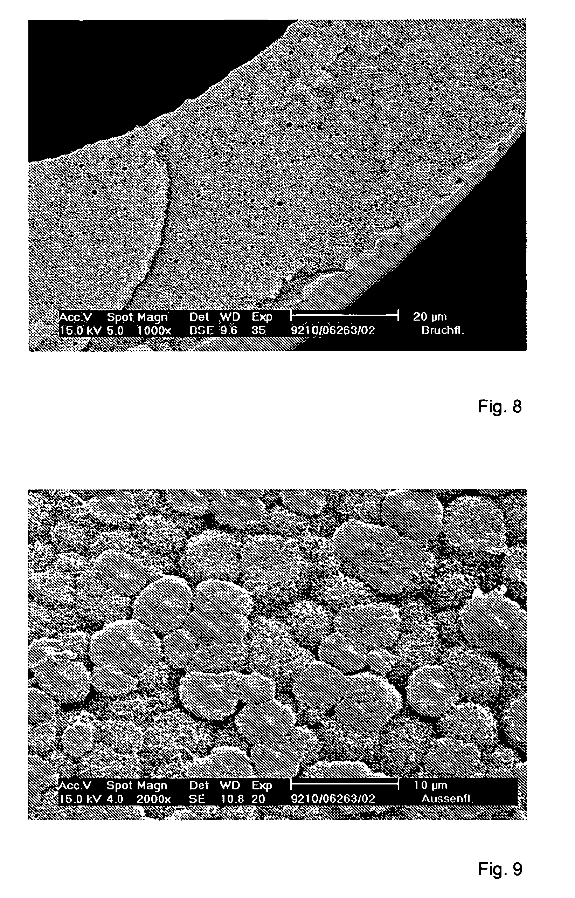

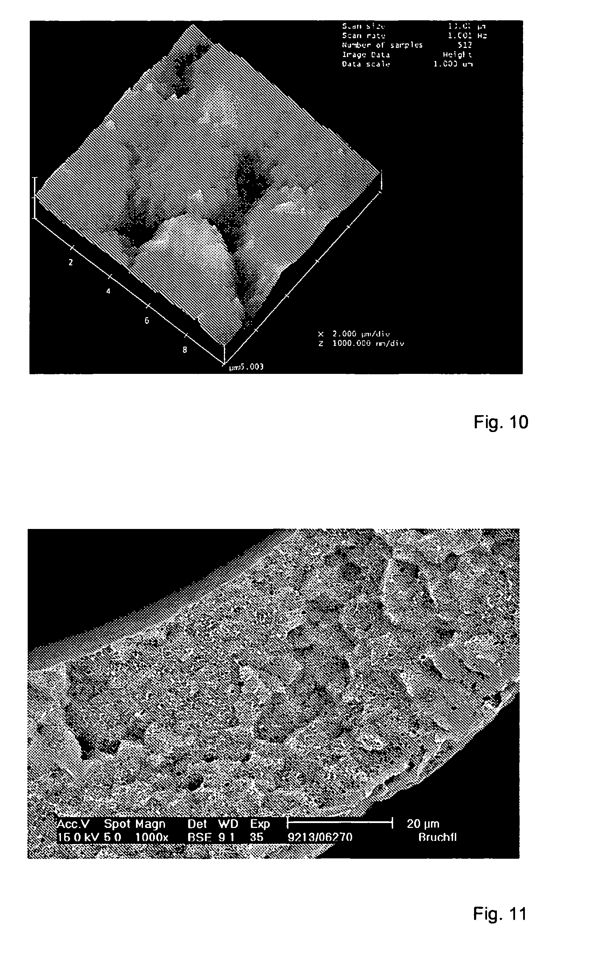

Ausweislich der rastereletronenmikroskopischen (REM-) Untersuchung der Bruchfläche der Hohlfasermembran zeigt die Hohlfasermembran über der Wand zwar ebenfalls eine sehr feinporige Struktur (Fig. 8), die aber vereinzelt Fehlstellen aufweist. Deutlich sind in der REM-Aufnahme der äußeren Oberfläche dieser Membran bei 5000facher Vergrößerung sphärolithische Strukturen zu erkennen. (Fig. 9). Gleichzeitig zeigt die Hohlfasermembran dieses Vergleichbeispiels mit einer Bruchfestigkeit von 11 N/mm$^2$ und einer Bruchdehnung von 119% eine vergleichsweise geringe mechanische Belastbarkeit. Auf Grund der stark strukturierten Oberfläche, wie sie in Fig. 9 zu sehen ist, liegt der über Rasterkraftmikroskopie (Atomic Force Microscopy) ermittelte Mittenrauwert $R_a$ bei ca. 145 nm. Fig. 10 zeigt eine 3D-Ansicht einer 10x10 $\mu$m Probe der äußeren Oberfläche der Hohlfasermembran dieses Vergleichsbeispiels, die ebenfalls eine ausgeprägte Oberflächenstruktur mit starken talförmigen Einbuchtungen zwischen als Erhebungen in Erscheinung tretenden Spärolithen erkennen lässt.

Vergleichsbeispiel 2:

Es wurde eine Hohlfasermembran wie in Beispiel 1 hergestellt, jedoch wurde als Abkühlmedium reines Glycerintriacetat verwendet, das auch als Löser (Komponente A) zur Herstellung der Polymerlösung eingesetzt wurde. Das Abkühlmedium wies damit keinen Nichtlösecharakter auf.

Die so hergestellte Hohlfasermembran hatte einen Außendurchmesser von 320 $\mu$m und eine Wandstärke von 50 $\mu$m. Für die Stickstoffpermeabilität resultierte ein Wert von 78 ml/(cm$^2$·min·bar).

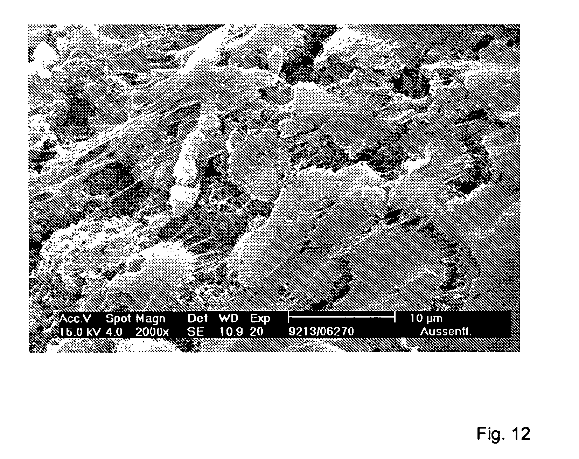

Ausweislich der rastereletronenmikroskopischen (REM-) Untersuchung der Bruchfläche der Hohlfasermembran zeigte die Hohlfasermembran über der Wand zwar ebenfalls eine feinporige Struktur (Fig. 11), das Aussehen des Bruches lässt jedoch bereits auf ausgeprägte spärolithische Bereiche innerhalb der Membranwand schließen. Entsprechend der in Fig. 12 gezeigten REM-Aufnahme der äußeren Oberfläche der Membran bei 5000facher Vergrößerung ist die Oberfläche in hohem Maße unregelmäßig und inhomogen und lässt auch ausgeprägte Strukturelemente erkennen, zwischen denen z.T. Bereiche liegen, die zur Oberfläche hin Poren aufweisen und die poröse Struktur der Stützschicht erkennen lassen. Gleichzeitig zeigt die Hohlfasermembran dieses Vergleichsbeispiels nur geringe mechanische Festigkeiten und Dehnungen. Auf Grund der stark strukturierten Oberfläche, liegt auch der Mittenrauwert $R_a$ deutlich oberhalb von 100 nm.

Beispiele 3 bis 5, Vergleichsbeispiele 3 bis 5:

Es wurde eine Hohlfasermembran wie in Beispiel 1 hergestellt, jedoch wurde durch Variation der Zusammensetzung des Abkühlmediums durch unterschiedliche Anteile an Glycerintriacetat (Löser), Dioctyladipat (Nichtlöser) und Rizinusöl (Nichtlöser) dessen Nichtlösercharakter verändert.

In Tabelle 1 sind die Zusammensetzungen der in diesen Beispielen und Vergleichsbeispielen eingesetzten Abkühlmedien aufgeführt. Diese Abkühlmedien wurden zunächst hinsichtlich ihrer Nichtlösereigenschaft untersucht. Hierzu wurde jeweils ein Modellsystem, bestehend aus 30 Gew.-% der Polymerkomponente, 40 Gew.-% der als Löser eingesetzten Verbindung A (Glycerintriacetat) und 30 Gew.-% des jeweiligen Abkühlmediums hinsichtlich seiner Entmischungstemperatur und seiner Erstarrungstemperatur sowie hinsichtlich der sich daraus ergebenden, in Prozent ausgedrückten Differenz der Entmischungstemperatur in Bezug auf die Erstarrungstemperatur untersucht.

Bei der Erspinnung von Hohlfasermembranen unter Verwendung dieser Abkühlmedien zeigte sich, dass bei Einsatz von Abkühlmedien, die entsprechend der Definition der vorliegenden Erfindung als starke Nichtlöser einzustufen sind (Beispiele 3 bis 5), Hohlfasermembranen erhalten wurden, deren äußere Oberfläche eine homogene, gleichförmige Struktur ohne Poren aufwies. Die in den Vergleichsbeispielen 3 bis 5 eingesetzten Abkühlmedien sind hingegen im Rahmen der Erfindung nicht als starke Nichtlöser in Bezug auf die Polymerkomponente einzustufen. Die damit erhaltenen Hohlfasermembranen zeigten eine äußere Oberfläche mit sphärolithischen Strukturelementen. Demzufolge wiesen die Hohlfasermembranen der Vergleichsbeispiele 3 bis 5 auch nur unzureichende mechanische Eigenschaften mit geringen Festigkeiten und geringen Dehnungen auf.

Tabelle 1: Untersuchung der Nichtlösereigenschaft der Abkühlmedien

| | Polymergehalt PVDF [Gew.-%] | Anteil Glycerintriacetat [Gew.-%] | 30 Gew.-% Abkühlmedium T : DOA : R | Entmischungstemperatur [°C] | Erstarrungstemperatur [°C] | ΔT [%] |
|---|---|---|---|---|---|---|
| Beispiel 3 | 30 | 40 | 0:90:10 | 180 | 118 | 53 |

(fortgesetzt)

| | Polymergehalt PVDF [Gew.-%] | Anteil Glycerin-triacetat [Gew.-%] | 30 Gew.-% Abkühlmedium T : DOA : R | Entmischungs-temperatur [°C] | Erstarrungs-temperatur [°C] | ΔT [%] |
|---|---|---|---|---|---|---|
| Beispiel 4 | 30 | 40 | 10:80:10 | 180 | 118 | 53 |
| Beispiel 5 | 30 | 40 | 20:70:10 | 153 | 118 | 30 |
| Vergleichsbeispiel 3 | 30 | 40 | 30:60:10 | 143 | 118 | 21 |
| Vergleichsbeispiel 4 | 30 | 40 | 40:50:10 | 119 | 112 | 6 |
| Vergleichsbeispiel 5 | 30 | 40 | 50:50: 0 | 115 | 110 | 5 |
| (T = Glycerintriacetat; DOA = Dioctyladipat; R = Rizinusöl; ΔT = Differenz zwischen Entmischungstemperatur und Erstarrungstemperatur in Prozent, bezogen auf die Erstarrungstemperatur) | | | | | | |

**Patentansprüche**

1. Hydrophobe integral asymmetrische Hohlfasermembran aus einem Vinylidenfluorid Homopolymer oder Copolymer, welche eine Wand mit einer äußeren Oberfläche an ihrer Außenseite und einer inneren Oberfläche an ihrer Innenseite und einer Wanddicke sowie ein von der Innenseite umschlossenes Lumen aufweist, wobei die Wand der Hohlfasermembran eine mikroporöse Stützschicht mit schwammartiger, offenporiger und über der Wanddicke im wesentlichen isotroper Porenstruktur ohne Fingerporen besitzt und wobei sich die Stützschicht über mindestens 90 % der Wanddicke erstreckt und Poren mit einem mittleren Durchmesser von weniger als 0,5 $\mu$m aufweist,
**dadurch gekennzeichnet,**

   - **dass** die Hohlfasermembran in der Wand angrenzend an die Stützschicht an ihrer äußeren Oberfläche eine Trennschicht mit einer Dicke im Bereich von 0,01 bis 5 $\mu$m und einer im Vergleich zur Stützschicht dichteren Struktur besitzt und ihre äußere Oberfläche bei rasterelektronenmikroskopischer Untersuchung mit 5000-facher Vergrößerung eine homogene, gleichförmige Struktur ohne Poren aufweist,
   - **dass** ihre Porosität im Bereich von 40 bis 80 Vol.-%, ihre Wanddicke im Bereich von 25 bis 100 $\mu$m und der Durchmesser ihres Lumens im Bereich von 100 bis 500 $\mu$m liegt und
   - **dass** ihre Permeabilität für Stickstoff mindestens 25 ml/(cm$^2$·min·bar) und ihre Bruchdehnung mindestens 250% beträgt.

2. Hohlfasermembran nach Anspruch 1, **dadurch gekennzeichnet, dass** der mittlere Durchmesser der Poren in der Stützschicht kleiner als 0,1 $\mu$m ist.

3. Hohlfasermembran nach Anspruch 1 oder 2, **dadurch gekennzeichnet, dass** die Porosität im Bereich von 45 bis 60 Vol.-% liegt.

4. Hohlfasermembran nach einem oder mehreren der Ansprüche 1 bis 3, **dadurch gekennzeichnet, dass** sie eine Bruchdehnung von mindestens 300 % aufweist.

5. Hohlfasermembran nach einem oder mehreren der Ansprüche 1 bis 4, **dadurch gekennzeichnet, dass** die Trennschicht eine Dicke im Bereich von 0,01 bis 0,6 $\mu$m aufweist.

6. Hohlfasermembran nach einem oder mehreren der Ansprüche 1 bis 5, **dadurch gekennzeichnet, dass** die äußere Oberfläche einen mittels Rasterkraftmikroskopie ermittelten Mittenrauwert $R_a$ von kleiner 100 nm aufweist.

7. Verfahren zur Herstellung einer Hohlfasermembran nach einem oder mehreren der Ansprüche 1 bis 6, umfassend mindestens die Schritte:

a) Herstellung einer homogenen Lösung von 20-60 Gew.-% einer Polymerkomponente aus mindestens einem Vinylidenfluorid Homopolymer oder Copolymer, in 80-40 Gew.-% eines Lösemittelsystems, wobei die Lösung aus Polymerkomponente und Lösemittelsystem bei Abkühlung eine kritische Entmischungstemperatur und eine Erstarrungstemperatur aufweist und unterhalb der kritischen Entmischungstemperatur im flüssigen Aggregatzustand eine Mischungslücke,

b) Ausformen der Lösung zu einer Hohlfaser mit einer äußeren Oberfläche an seiner Außenseite und einer inneren Oberfläche an seiner Innenseite in einer Hohlfaserdüse, welche eine Werkzeugtemperatur oberhalb der kritischen Entmischungstemperatur aufweist,

c) Abkühlung der Hohlfaser mittels eines Abkühlmediums, welches auf eine Abkühltemperatur unterhalb der Erstarrungstemperatur temperiert ist, mit einer solchen Geschwindigkeit, dass eine thermodynamische Nichtgleichgewichts-flüssig-flüssig-Phasentrennung in eine polymerreiche und eine polymerarme Phase und anschließend bei Unterschreiten der Erstarrungstemperatur Erstarrung der polymerreichen Phase erfolgt,

d) gegebenenfalls Entfernen des Lösemittelsystems aus der Hohlfaser, **dadurch gekennzeichnet,**

- **dass** das Lösemittelsystem eine Verbindung A und eine Verbindung B enthält, welche bei der Lösetemperatur flüssig und homogen miteinander mischbar sind, und wobei als Verbindung A ein Löser für die Polymerkomponente ausgewählt wird und die Verbindung B ein Nichtlöser für die Polymerkomponente ist
- **dass** die Hohlfaser zur Abkühlung mit ihrer äußeren Oberfläche mit einem flüssigen Abkühlmedium in Kontakt gebracht wird, welches chemisch nicht mit der Polymerkomponente reagiert und welches ein starker Nichtlöser für die Polymerkomponente ist, für den die Entmischungstemperatur eines Systems, bestehend aus 30 Gew.-% der Polymerkomponente, 40 Gew.-% der als Löser eingesetzten Verbindung A und 30 Gew.-% des Abkühlmediums, um mindestens 25%, bezogen auf die Erstarrungstemperatur, über der Erstarrungstemperatur dieses Systems liegt und
- **dass** das Abkühlmedium die Verbindung B enthält.

8. Verfahren nach Anspruch 7, **dadurch gekennzeichnet, dass** der Anteil der Verbindung B im Abkühlmedium mindestens 50 Gew.-% beträgt.

9. Verfahren nach einem oder beiden der Ansprüche 7 oder 8, **dadurch gekennzeichnet, dass** das Abkühlmedium aus Komponenten besteht, die jeweils Nichtlöser für die Polymerkomponente sind.

10. Verfahren nach einem oder mehreren der Ansprüche 7 bis 9, **dadurch gekennzeichnet, dass** das Abkühlmedium bei 23°C eine Viskosität im Bereich von 15 bis 200 mPa s aufweist.

11. Verfahren nach einem oder mehreren der Ansprüche 7 bis 10, **dadurch gekennzeichnet, dass** die Hohlfaser nach Austritt aus der Hohlfaserdüse zur Abkühlung durch ein Spinnrohr geführt wird, in dem sich das Abkühlmedium befindet, wobei der Hohlfaden und das Abkühlmedium das Spinnrohr in der gleichen Richtung und wobei die mittlere lineare Geschwindigkeit des Abkühlmediums mindestens um 20% kleiner ist als die Abzugsgeschwindigkeit des ausgeformten Hohlfadens durch das Spinnrohr.

12. Verfahren nach einem oder mehreren der Ansprüche 7 bis 11, **dadurch gekennzeichnet, dass** als Verbindung A Glycerintriacetat oder Glycerindiacetat oder Mischungen daraus verwendet werden.

13. Verfahren nach einem oder mehreren der Ansprüche 7 bis 12, **dadurch gekennzeichnet, dass** als Verbindung B Dioctyladipat, Rizinusöl, oder Mischungen daraus verwendet werden.

14. Verfahren nach einem oder mehreren der Ansprüche 7 bis 13, **dadurch gekennzeichnet, dass** das Abkühlmedium ein solches ist, für das die Entmischungstemperatur eines Systems, bestehend aus 30 Gew.-% der Polymerkomponente, 40 Gew.-% der als Löser eingesetzten Verbindung A und 30 Gew.-% des Abkühlmediums, um mindestens 40%, bezogen auf die Erstarrungstemperatur, über der Erstarrungstemperatur dieses Systems liegt.

**Claims**

1. A hydrophobic, integrally asymmetrical hollow-fiber membrane made of a vinylidene fluoride homopolymer or copolymer, which has a wall with an outer surface on its outer side and an inner surface on its inner side and a wall thickness, and a lumen enclosed by the inner side, wherein the wall of said hollow-fiber membrane has a microporous supporting layer with a sponge-like, open-pored, pore structure that is essentially isotropic across the wall thickness and without finger pores, and wherein said supporting layer extends across at least 90% of the wall thickness and has pores with an average diameter of less than 0.5 $\mu$m,
**characterized in that**

- the hollow-fiber membrane has in the wall a separating layer adjacent to the supporting layer on the outer surface thereof with a thickness in the range from 0.01 to 5 $\mu$m and a structure that is denser in contrast to the supporting layer, and the outer surface under scanning electron microscopic examination at 5000 times magnification has a homogeneous, uniform structure without pores,
- said hollow-fiber membrane has a porosity in the range from 40 to 80 vol.%, a wall thickness in the range from 25 to 100 $\mu$m, and a lumen diameter in the range from 100 to 500 $\mu$m, and
- the permeability for nitrogen is at least 25 ml/(cm$^2$·min·bar), and the elongation at break is at least 250%.

2. A hollow-fiber membrane according to Claim 1, **characterized in that** the average diameter of the pores in the supporting layer is less than 0.1 $\mu$m.

3. A hollow-fiber membrane according to Claim 1 or 2, **characterized in that** the porosity lies in the range from 45 to 60 vol.%.

4. A hollow-fiber membrane according to one or more of Claims 1 to 3, **characterized in that** it has an elongation at break of at least 300%.

5. A hollow-fiber membrane according to one or more of Claims 1 to 4, **characterized in that** the separating layer has a thickness in the range from 0.01 to 0.6 $\mu$m.

6. A hollow-fiber membrane according to one or more of Claims 1 to 5, **characterized in that** the outer surface has an average roughness $R_a$ of less than 100 nm as determined by means of atomic force microscopy.

7. A method for producing a hollow-fiber membrane according to one of more of Claims 1 to 6, comprising at least the steps:

a) production of a homogeneous solution of 20-60 wt.% of a polymer component made from at least one vinylidene fluoride homopolymer or copolymer in 80-40 wt.% of a solvent system, wherein the solution made from the polymer component and solvent system has during cooling a critical demixing temperature and a solidification temperature and a miscibility gap below the critical demixing temperature in the liquid state of aggregation,
b) shaping the solution into a hollow fiber with an outer surface on its outer side and an inner surface on its inner side in a hollow-fiber die which has a die temperature above the critical demixing temperature,
c) cooling the hollow fiber by means of a cooling medium, which is conditioned to a cooling temperature below the solidification temperature, at such a rate that a thermodynamic non-equilibrium liquid-liquid phase separation into a polymer-rich and a polymer-poor phase takes place, and subsequently, on passing below the solidification temperature, solidification of the polymer-rich phase takes place,
d) removal of the solvent system from the hollow fiber, if necessary, **characterized in that**

- the solvent system contains a compound A and a compound B which are liquid and can be mixed homogeneously with each other at the dissolving temperature, and wherein a solvent for the polymer component is selected for compound A and a non-solvent for the polymer component is selected for compound B,
- the hollow fiber is brought for cooling into contact at its outer surface with a liquid cooling medium which does not react chemically with the polymer component and which is a strong non-solvent for the polymer component, for which cooling medium the demixing temperature of a system which consists of 30 wt.% of the polymer component, 40 wt.% of the compound A used as a solvent, and 30 wt.% of the cooling medium lies, in relation to the solidification temperature, at least 25% above the solidification temperature of this system, and
- the cooling medium contains compound B.

8. A method according to Claim 7, **characterized in that** the proportion of compound B in the cooling medium is at least 50 wt.%.

9. A method according to one or both of Claims 7 or 8, **characterized in that** the cooling medium consists of components that are each non-solvents for the polymer component.

10. A method according to one or more of Claims 7 to 9, **characterized in that** the cooling medium has a viscosity in the range from 15 to 200 mPa s at 23°C.

11. A method according to one or more of Claims 7 to 10, **characterized in that**, after exiting from the hollow-fiber die, the hollow fiber is fed for cooling through a spinning tube in which the cooling medium is located, wherein the hollow fiber and the cooling medium traverse the spinning tube in the same direction and wherein the average linear speed of the cooling medium is at least 20% lower than the drawing speed of the shaped hollow fiber through the spinning tube.

12. A method according to one or more of Claims 7 to 11, **characterized in that** glycerin triacetate or glycerin diacetate or mixtures thereof are used as compound A.

13. A method according to one or more of Claims 7 to 12, **characterized in that** dioctyl adipate, castor oil or mixtures thereof are used as compound B.

14. A method according to one or more of Claims 7 to 13, **characterized in that** the cooling medium is such that the demixing temperature of a system consisting of 30 wt.% of the polymer component, 40 wt.% of compound A used as a solvent, and 30 wt.% of the cooling medium lies, in relation to the solidification temperature, at least 40% above the solidification temperature of this system.

**Revendications**

1. Membrane-fibre creuse, hydrophobe et intégralement asymétrique, faite d'un homopolymère ou copolymère de fluorure de vinylidène, qui comporte une paroi dotée d'une surface externe sur sa face externe et d'une surface interne sur sa face interne, ainsi que d'une épaisseur de paroi, et une lumen entourée par la face interne de la paroi, laquelle paroi de ladite membrane-fibre creuse comporte une couche de support microporeuse, dotée d'une structure de pores de type éponge et à pores ouverts, essentiellement isotrope dans l'épaisseur de la paroi et dépourvue de pores en forme de doigt, laquelle couche de support représente au moins 90 % de l'épaisseur de la paroi et présente des pores dont le diamètre moyen est inférieur à 0,5 $\mu$m,
   **caractérisée en ce**ci :

   - que la membrane-fibre creuse comporte dans la paroi, adjacente à la couche de support sur la surface externe de celle-ci, une couche de séparation dotée d'une épaisseur de 0,01 à 5 $\mu$m et d'une structure plus dense que celle de la couche de support, et que sa surface externe présente, à l'examen au microscope électronique à balayage avec un facteur de grossissement de 5000, une structure homogène et uniforme, dépourvue de pores ;
   - que son degré de porosité vaut de 40 à 80 % en volume, l'épaisseur de sa paroi vaut de 25 à 100 $\mu$m et le diamètre de sa lumen vaut de 100 à 500 $\mu$m ;
   - et que sa perméabilité vis-à-vis de l'azote a une valeur d'au moins 25 mL/(cm$^2$·min·bar) et son allongement à la rupture vaut au moins 250 %.

2. Membrane-fibre creuse selon la revendication 1, **caractérisée en ce que** le diamètre moyen des pores de la couche de support est inférieur à 0,1 $\mu$m.

3. Membrane-fibre creuse selon la revendication 1 ou 2, **caractérisée en ce que** son degré de porosité vaut de 45 à 60 % en volume.

4. Membrane-fibre creuse selon à l'une ou plusieurs des revendications 1 à 3, **caractérisée en ce qu'**elle présente un allongement à la rupture d'au moins 300 %.

5. Membrane-fibre creuse selon l'une ou plusieurs des revendications 1 à 4, **caractérisée en ce que** la couche de séparation est épaisse de 0,01 à 0,6 $\mu$m.

6. Membrane-fibre creuse selon l'une ou plusieurs des revendications 1 à 5, **caractérisée en ce que** sa surface externe présente un indice moyen de rugosité $R_a$, déterminé par microscopie à force atomique, inférieur à 100 nm.

**7.** Procédé de fabrication d'une membrane-fibre creuse selon l'une ou plusieurs des revendications 1 à 6, comportant au moins les étapes:

a) préparer une solution homogène comprenant de 20 à 60 % en poids d'un composant polymère, constitué d'au moins un homopolymère ou copolymère de fluorure de vinylidène, dans 80 à 40 % en poids d'un système solvant, laquelle solution de composant polymère et de système solvant présente, lors d'un refroidissement, une température critique de démixtion et une température de solidification, et, au-dessous de la température critique de démixtion, à l'état liquide, une lacune de miscibilité;

b) transformer la solution en une fibre creuse, dotée d'une surface externe sur sa face externe et d'une surface interne sur sa face interne, dans une filière pour fibres creuses dont l'outil de travail se trouve à une température supérieure à ladite température critique de démixtion ;

c) refroidir la fibre creuse au moyen d'un milieu réfrigérant, dont la température est réglée à une valeur de refroidissement, plus basse que ladite température de solidification, en opérant à une vitesse telle que se produise une séparation de phases liquide-liquide en état non-équilibre thermodynamique, en une phase pauvre en polymère et une phase riche en polymère, laquelle phase riche en polymère se solidifie lorsqu'on poursuit le refroidissement au-dessous de ladite température de solidification ;

d) et en option, élimination du système solvant de la fibre creuse ;

et **caractérisé en ce**ci :

- que le système solvant comprend un composé A et un composé B qui, à la température de dissolution, sont liquides et miscibles l'un à l'autre au point de donner un mélange homogène, étant entendu que le composé A choisi est un solvant du composant polymère et que le composé B est un non-solvant du composant polymère,

- que pour refroidir la fibre creuse, on met sa surface externe en contact avec un milieu liquide réfrigérant qui n'entre pas en réaction chimique avec le composant polymère et qui est, pour ce composant polymère, un non-solvant plus fort pour lequel la température de démixtion d'un système formé de 30 % en poids du composant polymère, 40 % en poids du composé A utilisé comme solvant et 30 % en poids du milieu réfrigérant se situe au moins 25 %, par rapport à la température de solidification, plus haut que la température de solidification de ce système,

- et que le milieu réfrigérant contient du composé B.

**8.** Procédé selon la revendication 7, **caractérisé en ce que** la proportion de composé B dans le milieu réfrigérant vaut au moins 50 % en poids.

**9.** Procédé selon l'une des revendications 7 et 8 ou à ces deux revendications, **caractérisé en ce que** le milieu réfrigérant est formé de composants qui sont tous des non-solvants du composant polymère.

**10.** Procédé selon l'une ou plusieurs des revendications 7 à 9, **caractérisé en ce que** le milieu réfrigérant présente, à 23 °C, une viscosité de 15 à 200 mPa.s.

**11.** Procédé selon l'une ou plusieurs des revendications 7 à 10, **caractérisé en ce que** la fibre creuse, après être sortie de la buse à fibres creuses, est amenée, pour être refroidie, à passer dans un tube de filage dans lequel se trouve le milieu réfrigérant, étant entendu que la fibre creuse et le milieu réfrigérant coule dans le même sens à l'intérieur du tube de filage, et que la vitesse linéaire moyenne du milieu réfrigérant est inférieure d'au moins 20 % à la vitesse avec laquelle on tire la fibre creuse formée pour la faire passer dans le tube de filage.

**12.** Procédé selon l'une ou plusieurs des revendications 7 à 11, **caractérisé en ce que** l'on utilise, en tant que composé A, du tri-acétate de glycérol ou du diacétate de glycérol, ou un mélange de ces composés.

**13.** Procédé selon l'une ou plusieurs des revendications 7 à 12, **caractérisé en ce que** l'on utilise, en tant que composé B, de l'adipate de dioctyle ou de l'huile de ricin, ou un mélange de ces com-posés

**14.** Procédé selon l'une ou plusieurs des revendications 7 à 13, **caractérisé en ce que** le milieu réfrigérant est un milieu pour lequel la température de démixtion d'un système formé de 30 % en poids du composant polymère, 40 % en poids du composé A utilisé comme solvant et 30 % en poids du milieu réfrigérant se situe au moins 40 %, par rapport à la température de solidification, plus haut que la température de solidification de ce système.

Fig. 1

Fig. 2

Fig. 3

Fig. 4

Fig. 5

Acc.V Spot Magn Det WD Exp | 5 µm
15.0 kV 3.0 5000x SE 9.3 15 9217/06303 Bruchfl

Fig. 6

Acc.V Spot Magn Det WD Exp | 5 µm
15.0 kV 3.0 5000x SE 10.7 3 9217/06303 Aussenfl.

Fig. 7

Fig. 8

Fig. 9

Fig. 10

Fig. 11

Acc.V Spot Magn   Det  WD  Exp                    10 µm
15.0 kV 4.0  2000x   SE   10.9 20   9213/06270    Aussenfl.

Fig. 12

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 3558764 A
- US 4664681 A
- US 6497752 A
- EP 0378441 A
- US 5514461 A
- US 5736051 A
- EP 0734759 A
- EP 0133882 A
- WO 02058828 A
- US 20040135274 A
- EP 1230970 A
- WO 9322034 A
- DE 2737745 A
- DE 2833493 A
- EP 133882 A

**In der Beschreibung aufgeführte Nicht-Patentliteratur**

- **R.E. Kesting.** Synthetic Polymeric Membranes. John Wiley & Sons, 1985, 261-264
- **von C.A. Smolders ; J.J. van Aartsen ; A. Steenbergen.** *Kolloid-Z. und Z. Polymere,* 1971, vol. 243, 14-20